# EUROPEAN PATENT APPLICATION

(11) **EP 3 733 441 A1**
(43) Date of publication of application: **04.11.2020**
(21) Application number: 18893698.3
(22) Date of filing: 26.12.2018
(51) Int. Cl.: B60K 35/00, B60R 11/02, B60W 50/14, G01C 21/36, G02B 27/01, G08G 1/16

(54) **HEAD-UP DISPLAY DEVICE**

(30) Priority: 28.12.2017 JP 2017253479; 28.12.2017 JP 2017253770
(71) Applicant: KOITO MANUFACTURING CO., LTD., Minato-ku Tokyo 108-8711 (JP)
(72) Inventor: HAYAKAWA, Michihiko, Shizuoka-shi, Shizuoka 424-8764 (JP); MURATA, Kouhei, Shizuoka-shi, Shizuoka 424-8764 (JP); OKAMURA, Shunsuke, Shizuoka-shi, Shizuoka 424-8764 (JP); IWASAKI, Jun, Shizuoka-shi, Shizuoka 424-8764 (JP)
(74) Representative: Cabinet Beau de Loménie
(86) International application number: PCT/JP2018/047784
(87) International publication number: WO 2019/131735

(57) **Abstract**

A HUD apparatus (100) is mounted on a vehicle (1) having a plurality of driving modes with different degrees of automation. The HUD apparatus (100) displays a predetermined content in a predetermined display region (20) provided in front of a driver seat. The HUD apparatus 100 displays different contents (C01, C02, C21, C22, C23, C31, and C32) depending on the plurality of driving modes.

## Description

### TECHNICAL FIELD

The present disclosure relates to a head-up display apparatus (hereinafter, referred to as "HUD apparatus").

### BACKGROUND ART

A driving operation (steering, acceleration, and deceleration) of an automobile (hereinafter, referred to as a vehicle) is not performed at all or only a limited driving operation is performed by a person, so that a vehicle that can travel automatically (hereinafter, also referred to as an "automatic driving vehicle") is being developed.

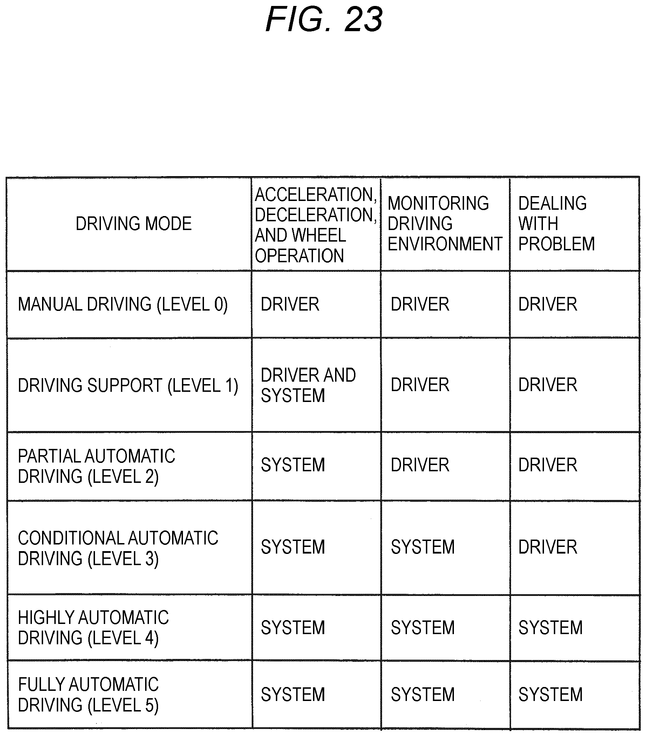

Driving modes of the automatic driving vehicle include an automatic driving mode in which at least a part of a driving operation by the person is taken over by a system, and a manual driving mode in which the person performs all driving operations without receiving system assistance. Specifically, driving modes of a vehicle in automatic driving of all six stages including automatic driving modes of five stages (level 1 to level 5) with different degrees of automation and a manual driving mode (level 0) are defined by a society of automotive engineers standard (SAE) (see Fig. 23).

Then, the automatic driving vehicle has a plurality of driving modes including the manual driving mode, and a driving mode can be changed in accordance with a purpose. For example, follow-up control (hereinafter, referred to as "ACC") as described in Patent Literature 1 in which a vehicle travels while keeping an inter-vehicle distance from a preceding vehicle constant is used in a vehicle having a manual driving mode and an automatic driving mode (equal to or higher than level 1). A HUD apparatus that displays information effective for a driver is mounted on the vehicle.

Patent Literature 1 discloses the HUD apparatus mounted on a vehicle that can perform the ACC using inter-vehicle communication. In order to cause the driver of the subject vehicle to recognize other vehicles including a reference preceding vehicle that serves as a reference, the HUD apparatus generates, based on obtained information about other vehicles, contents indicating traveling states such as driving modes and behavior of other vehicles. The HUD apparatus projects these contents together with separately generated contents indicating a driving mode of the subject vehicle onto a predetermined display region of a windshield. The HUD apparatus displays the contents, which indicate the traveling states such as the driving modes and the behavior of other vehicles, so as to be superimposed on scenery seen through the windshield from a driver seat of the subject vehicle while associating the contents with other vehicles (see Figs. 5, 6, and 7 of Patent Literature 1).

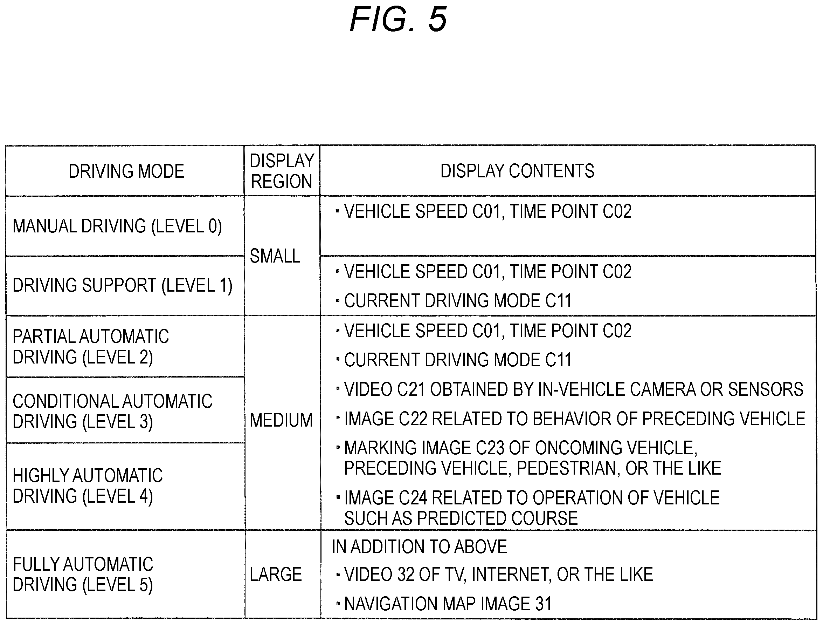

For example, in Fig. 5, contents "ACC" and "60 Km" indicating a driving mode of the subject vehicle are displayed below a predetermined display region of a windshield of the subject vehicle. Further, "AUTO MODE", "SOON TO RIGHT LANE", "MANUAL MODE", and "BRAKE", which are contents indicating traveling states such as driving modes and behavior of other vehicles, are displayed so as to be superimposed on other vehicles in the predetermined display region of the windshield. Accordingly, the driver can identify and recognize the traveling states of other vehicles that exist around.

### CITATION LIST

### PATENT LITERATURE

Patent Literature 1: Japanese Patent Application Laid-Open Publication No. 2017-37634

### SUMMARY OF INVENTION

### TECHNICAL PROBLEM

In the automatic driving vehicle, as illustrated in Fig. 23, obligations imposed on the driver such as monitoring a driving environment and dealing with a problem (driving operation) are different depending on a driving mode of the vehicle. Therefore, when the driving mode of the vehicle is switched (changed), the HUD apparatus should display contents corresponding to a driving mode after the switching. However, Patent Literature 1 does not describe at all how the displayed contents are changed in response to the change in the driving mode of the vehicle.

Further, when a driving mode of the vehicle is changed, the HUD apparatus should display contents notifying the driver that the driving mode is changed. However, Patent Literature 1 does not describe such contents at all.

An object of the present disclosure is to provide a head-up display apparatus that changes a content displayed in a predetermined display region depending on switching (changing) of a driving mode of a vehicle.

Further, another object of the present disclosure is to provide a head-up display apparatus that displays a content indicating a notice of change in a driving mode when the driving mode of a vehicle is changed.

### SOLUTION TO PROBLEM

According to a HUD apparatus of an aspect of the present disclosure, a head-up display apparatus is provided which is mounted on a vehicle having a plurality of driving modes with different degrees of automation and which is configured to display a predetermined content in a predetermined display region provided in front of a driver seat,
in which different contents are displayed depending on the plurality of driving modes.

(Functions) For each driving mode, obligations required for a driver (monitoring a driving environment, a driving operation that is dealing with a problem) are different. Therefore, contents effective for the driver in a certain driving mode are not necessarily contents effective for the driver in another driving mode. For example, when a driving mode of the vehicle is changed from a level 3 (conditional automatic driving mode) to a level 5 (fully automatic driving mode), that is, when a degree of automation of the driving mode of the vehicle is improved, contents effective for the driving mode of level 3 may also be unnecessary contents that may provide anxiety to the driver in the driving mode of level 5.

In the HUD apparatus according to the aspect of the present disclosure, the HUD apparatus displays, depending on switching (changing) of a driving mode of the vehicle, contents effective for the driver and corresponding to a new driving mode after the switching in the predetermined display region provided in front of the driver. That is, when a driving mode of the vehicle is changed (a driving mode of the vehicle is switched), contents displayed by the HUD apparatus are also changed to contents effective for the driver and corresponding to a driving mode after the change (newly changed driving mode). Therefore, the driver can always benefit from a driving mode of the vehicle.

Further, in another aspect,
the HUD apparatus may change at least one of a size of a display region and a display position of one of the contents depending on change of the driving modes of the vehicle.

(Functions) As for driving modes of the automatic driving vehicle, driving modes of all six stages (level 0 to level 5) with different degrees of automation are defined by an SAE standard (see Fig. 23). Then, the higher (lower) the degree of automation is in a driving mode, the more dependent on a system (driver) for monitoring a driving environment and dealing with a problem. Therefore, it is desirable to change sizes of display regions and display positions of contents depending on driving modes of the vehicle.

Further, in another aspect,
the plurality of driving modes may include an automatic driving mode and a manual driving mode, and
the HUD apparatus may set a display region of a content corresponding to the automatic driving mode to be wider than a display region of a content corresponding to the manual driving mode.

(Functions) Since the driver always performs a driving operation in a manual driving mode (level 0), sizes of display regions of contents are small so as not to obstruct a view in front of the driver. On the other hand, in an automatic driving mode (equal to or higher than level 1), when a driving operation is assisted by the system, for example, display regions of contents can be increased so as to display contents corresponding to the automatic driving mode (equal to or higher than level 1) within a range in which a driving operation of the driver is not hindered. That is, the higher the degree of automation is in the driving mode, the more monitoring a driving environment and dealing with a problem (driving operation) are shifted from the driver to the system. Therefore, the higher the degree of automation is in the driving mode, the larger the display regions of the contents can be.

For example, in a driving mode having a highest degree of automation (for example, a level 5) in which the driver does not perform any driving operation and monitoring a driving environment by the driver is also not necessary, there is no problem even when the view in front of the driver is obstructed. Therefore, display regions of contents corresponding to the automatic driving mode are made wider than display regions of contents corresponding to the manual driving mode, so that the display regions of the contents corresponding to the automatic driving mode can be used for an automatic driving mode having a high degree of automation, such as using the display regions as TV videos or monitor screens of internet communication.

Further, in another aspect,
at least a part of a display region of one of the contents is configured to be switchable between a light-transmitting state and a non-light-transmitting state, and
the HUD apparatus may change a size of a region of the non-light-transmitting state depending on the driving modes.

(Functions) A light control mirror or a liquid crystal shutter that can switch a state between a light-transmitting state and a non-light-transmitting state is provided in a display region of a content, so that a light-transmitting state and a non-light-transmitting state of the region provided with the light control mirror or the liquid crystal shutter can be switched. Therefore, in the region provided with the light control mirror or the liquid crystal shutter, a predetermined content can be displayed so as to be superimposed on scenery seen through the display region of the content. Further, the region provided with the light control mirror or the liquid crystal shutter can also be used as a monitor screen where a background that displays the predetermined content cannot be seen through. Therefore, various contents corresponding to different driving modes can be displayed.

According to a HUD apparatus of an aspect of the present disclosure, a HUD apparatus is provided which is mounted on a vehicle having a plurality of driving modes with different degrees of automation and which is configured to display a predetermined content in a predetermined display region provided in front of a driver seat,
in which when the driving mode of the vehicle is changed, the HUD apparatus is configured to display a content which indicates a notice of the change in the driving mode (hereinafter, referred to as "display a mode change notice).

(Functions) The HUD apparatus displays contents indicating a driving mode of the vehicle in the predetermined display region provided in front of the driver seat of the vehicle, so that the driver can confirm the driving mode of the subject vehicle. Then, when the driving mode of the vehicle is changed, contents that indicate the driving mode and are displayed in the display region are changed to contents indicating a driving mode after the change, so that the driver can confirm that the driving mode of the vehicle has been changed. However, at a stage where the contents indicating the driving mode of the vehicle are changed, when the driver neglects to see a display of the change, or when seeing the display is delayed, it may take time to confirm that the driving mode has been changed, and dealing with a driving mode after the change may be delayed.

In the HUD apparatus according to the aspect of the present disclosure, when the driving mode of the vehicle is changed, the mode change notice is displayed. Therefore, the driver can recognize the change in the driving mode in advance and can deal with the change in the driving mode with a margin.

Further, for example, even when the driver neglects to see the mode change notice display or noticing the display is delayed, the driver may recognize the change in the driving mode by seeing the mode change notice display during a period after the mode change notice is displayed and before the change in the driving mode is completed. Therefore, a probability that the driver recognizes the change in the driving mode in advance is higher than that in a case where the mode change notice is not displayed. Accordingly, the driver can deal with the change in the driving mode with a margin, such as being able to quickly deal with the driving mode after the change.

Further, in another aspect,
the vehicle may have a first driving mode (equal to or higher than a level 4) that does not require a driving operation by a driver and a second driving mode (equal to or lower than a level 3) that requires a driving operation by the driver, and
when a driving mode of the vehicle is changed from the first driving mode to the second driving mode, the HUD apparatus may display the mode change notice.

(Functions) When a driving mode of the vehicle is changed from a driving mode (equal to or higher than level 4) that does not require a driving operation by the driver to a driving mode (equal to or lower than level 3) that requires a driving operation by the driver, there may be a case where the driver performs the driving operation by himself/herself immediately after the driving mode is changed (for example, a case where the driving mode of the vehicle is changed to the manual driving mode). However, since the driver can recognize the change in the driving mode in advance by the mode change notice display, the driver can deal with the change in the driving mode with a margin such that the driving operation is performed on the vehicle at the same time when the change in the driving mode is completed.

In another aspect, when displaying the mode change notice, the HUD apparatus may display a content indicating a time (time limit) before the change in the driving mode is completed.

(Functions) A time after a mode change notice is displayed and before change in a driving mode is completed is notified, so that the driver can deal with a driving mode after the change with a margin.

Further, in another aspect,
the change in the driving mode may be automatically determined based on information detected by a sensor and the like mounted on the vehicle, and
the HUD apparatus may display a content indicating a reason for the change in the driving mode.

(Functions) A vehicle controller (in-vehicle AI) determines whether to change a driving mode of the vehicle from the automatic driving mode to the manual driving mode based on an operation of mode change switch by the driver or based on information detected by a sensor and the like mounted on the vehicle. Particularly, in a latter case where a will of the driver is irrelevant, when a reason for the change in the driving mode is not displayed, psychological anxiety may be given to the driver. However, since contents indicating the reason for the change in the driving mode are displayed together with the mode change notice display, the driver knows the reason for the change in the driving mode in advance and does not feel the psychological anxiety.

Further, in another aspect,
when displaying the mode change notice, the HUD apparatus may generate a predetermined sound indicating the notice of the change in the driving mode.

(Functions) Generally, the driver can recognize change in a driving mode in advance by a mode change notice display. However, it is also conceivable that the mode change notice display may be overlooked for some reason. Some reason includes, for example, chatting with a passenger, being careless, or thinking of something. Therefore, during the mode change notice display, a predetermined sound indicating a notice of the change in the driving mode is generated, so that the driver can reliably recognize in advance that the driving mode of the vehicle will be changed.

### ADVANTAGEOUS EFFECTS OF INVENTION

According to the present disclosure, a head-up display apparatus can be provided which changes a content displayed in a predetermined display region depending on switching (changing) of driving modes of a vehicle.

Further, according to the present disclosure, a head-up display apparatus can be provided which displays a content indicating a notice of change in a driving mode when the driving mode of a vehicle is changed.

### BRIEF DESCRIPTION OF DRAWINGS

Fig. 1A is a plan view illustrating a vehicle on which a HUD apparatus according to a first embodiment of the present invention is mounted.
Fig. 1B is a side view illustrating the vehicle.
Fig. 2 is a vertical cross-sectional view of a periphery of a driver seat of the vehicle (cross-sectional view taken along a line II-II illustrated in Fig. 1A) and is a view illustrating the configuration of the HUD apparatus.
Fig. 3 is a perspective view when the driver seat of the vehicle is viewed from a rear side of a vehicle interior (perspective view taken along a line III-III illustrated in Fig. 1B).
Fig. 4 is a block diagram illustrating the configuration of an entire vehicle system of the automatic driving vehicle.
Fig. 5 is a table illustrating contents corresponding to driving modes of the vehicle and sizes of content display regions.
Fig. 6A is an illustrative diagram of a HUD display processing showing contents corresponding to a manual driving mode (level 0) of the HUD apparatus according to the first embodiment.
Fig. 6B is an illustrative diagram of a HUD display processing showing contents corresponding to a conditional automatic driving mode (level 3) of the HUD apparatus.
Fig. 6C is an illustrative diagram of a HUD display processing showing contents corresponding to a fully automatic driving mode (level 5) of the HUD apparatus.
Fig. 7 is a flowchart illustrating a processing of changing contents displayed by the HUD apparatus depending on driving modes of the vehicle.
Fig. 8 is an enlarged perspective view of an illumination unit of an illumination apparatus installed on a ceiling of the vehicle.
Fig. 9 is a table illustrating illumination states of the illumination unit corresponding to the driving modes of the vehicle.
Fig. 10 is a flowchart illustrating a processing of changing an illumination state of the illumination unit by the illumination apparatus depending on driving modes of the vehicle.
Fig. 11A is a plan view illustrating a vehicle on which a HUD apparatus according to a second embodiment of the present invention is mounted.
Fig. 11B is a side view illustrating the vehicle.
Fig. 12 is a vertical cross-sectional view of a periphery of a driver seat of the vehicle (cross-sectional view taken along a line II-II illustrated in Fig. 11A) and is a view illustrating the configuration of the HUD apparatus.
Fig. 13 is a perspective view when the driver seat of the vehicle is viewed from a rear side of a vehicle interior (perspective view taken along a line III-III illustrated in Fig. 11B).
Fig. 14 is a block diagram illustrating the configuration of an entire vehicle system of the automatic driving vehicle.
Fig. 15 is a diagram illustrating in time series a HUD display processing when a driving mode of the vehicle is automatically (regardless of a will of a driver) changed from an automatic driving mode (level 4) to a manual driving mode (level 0).
Fig. 16 is a diagram illustrating contents of the HUD display processing when the driving mode of the vehicle is automatically changed from the automatic driving mode (level 4) to the manual driving mode (level 0).
Fig. 17 is a diagram illustrating contents that indicate a time limit after a mode change notice is displayed and before the driving mode of the vehicle is changed.
Fig. 18 is a diagram illustrating in time series a HUD display processing when a driving mode of the vehicle is manually changed from the manual driving mode (level 0) to the automatic driving mode (level 4).
Fig. 19 is a diagram illustrating contents of the HUD display processing when the driving mode of the vehicle is manually changed from the manual driving mode (level 0) to the automatic driving mode (level 4).
Fig. 20 is a diagram illustrating contents that indicate a time limit after a mode change notice is displayed and before the driving mode of the vehicle is changed.
Fig. 21A is a vertical cross-sectional view illustrating the configuration of a HUD apparatus according to a third embodiment of the present invention and is a view corresponding to Fig. 2.
Fig. 21B is a vertical cross-sectional view illustrating the configuration of a HUD apparatus according to a fourth embodiment of the present invention and is a view corresponding to Fig. 2.
Fig. 22 is a vertical cross-sectional view illustrating the configuration of a HUD apparatus according to a fifth embodiment of the present invention and is a view corresponding to Fig. 2.
Fig. 23 is a table illustrating driving modes (level 0 to level 5) of an automatic driving vehicle in an SAE standard.

### DESCRIPTION OF EMBODIMENTS

### (First Embodiment)

Hereinafter, a first embodiment of the present invention (hereinafter, referred to as the first embodiment) will be described with reference to the drawings.

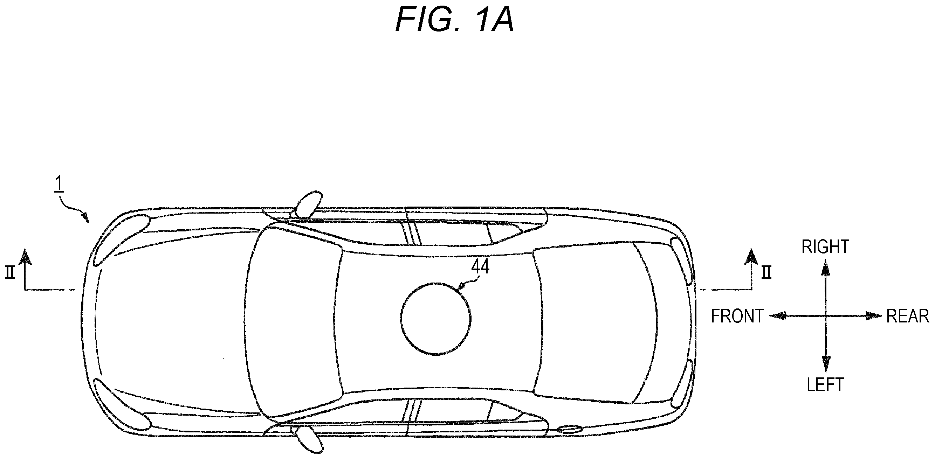

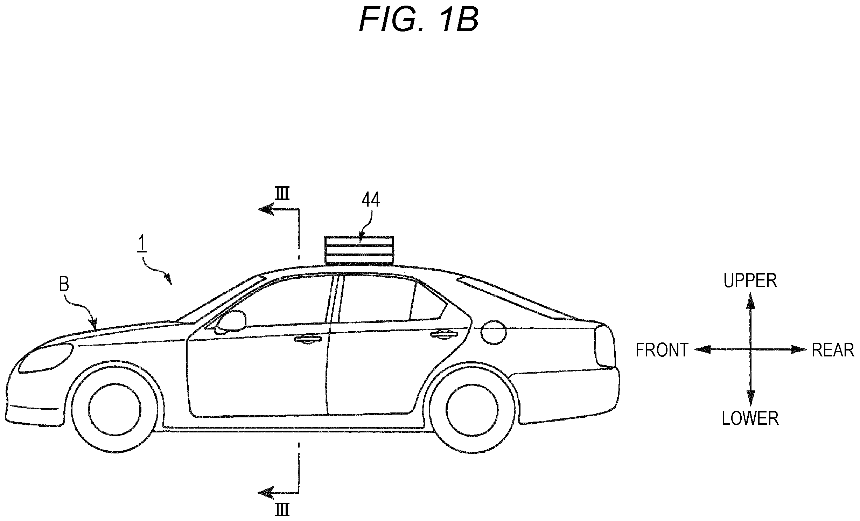

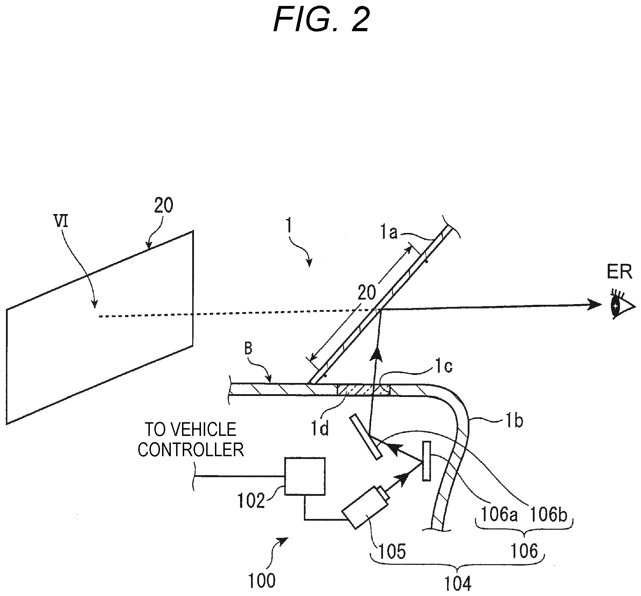

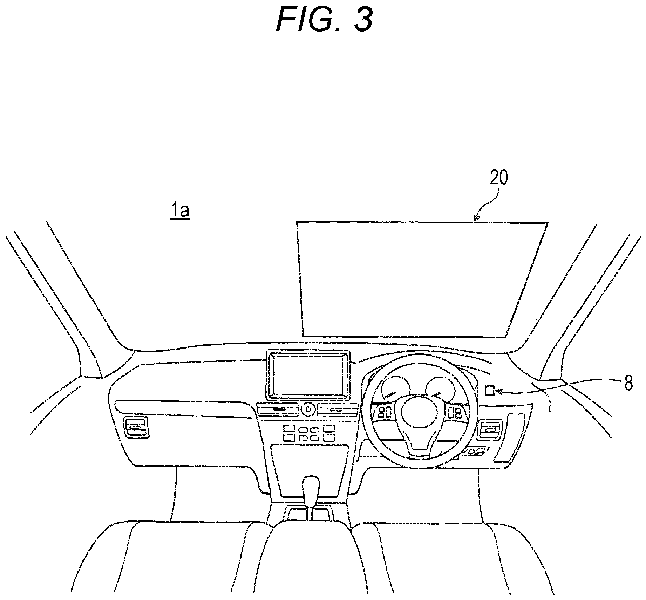

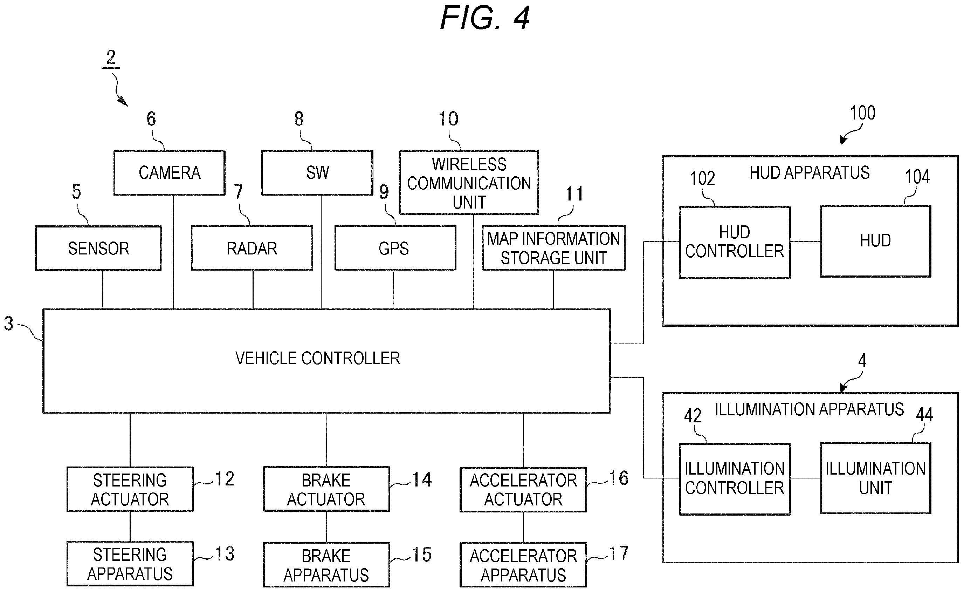

Figs. 1A and 1B illustrate a vehicle 1 on which a HUD apparatus 100 according to the first embodiment is mounted. Fig. 2 is a vertical cross-sectional view of a periphery of a driver seat of the vehicle (cross-sectional view taken along a line II-II illustrated in Fig. 1A) and illustrates the configuration of the HUD apparatus 100. Fig. 3 is a perspective view when the driver seat of the vehicle is viewed from a rear side of a vehicle interior (perspective view taken along a line III-III illustrated in Fig. 1B). Fig. 4 is a block diagram illustrating the configuration of an entire vehicle system of the vehicle 1 that is an automatic driving vehicle.

In these drawings, the vehicle 1 is an automobile that can travel in an automatic driving mode (hereinafter, also referred to as "automatic driving vehicle"). The vehicle 1 includes the HUD apparatus 100 and an illumination apparatus 4. The HUD apparatus 100 is an apparatus that displays predetermined contents (images) in a predetermined display region 20 provided in front of a driver who sits in the driver seat. The displayed contents mainly indicate various pieces of traveling information effective for a driving operation of the driver. Hereinafter, "displaying predetermined contents in a predetermined display region" is referred to as a "HUD display processing". The predetermined display region 20 is, for example, a predetermined region of a windshield 1a. The HUD apparatus 100 includes a HUD controller 102 and a HUD 104 (see Figs. 2 and 4). The illumination apparatus 4 is an apparatus that displays information indicating a driving mode of the vehicle 1 toward outside of the vehicle. The illumination apparatus 4 includes an illumination controller 42 and an illumination unit 44. The illumination unit 44 is disposed on a vehicle body roof of the vehicle 1 (see Figs. 1 and 4).

### (Vehicle System 2)

First, a vehicle system 2 adopted in the vehicle 1 will be described with reference to Fig. 4. As illustrated in Fig. 4, the vehicle system 2 includes a vehicle controller 3, the HUD apparatus 100, the illumination apparatus 4, a sensor 5, a camera 6, a radar 7, a driving mode switching switch 8, a global positioning system (GPS) 9, a wireless communication unit 10, and a map information storage unit 11. Further, the vehicle system 2 includes a steering actuator 12, a steering apparatus 13, a brake actuator 14, a brake apparatus 15, an accelerator actuator 16, and an accelerator apparatus 17.

The vehicle controller 3 controls traveling of the vehicle 1. The vehicle controller 3 is configured with, for example, an electronic control unit (ECU). The electronic control unit includes a microcontroller including a processor and a memory, and other electronic circuits (for example, a transistor). The processor includes, for example, a central processing unit (CPU), a micro processing unit (MPU), and/or a graphics processing unit (GPU). The memory includes a read only memory (ROM) that stores various vehicle control programs (for example, an artificial intelligence (AI) program for automatic driving), and a random access memory (RAM) that temporarily stores various pieces of vehicle control data. The processor loads a program specified from the various vehicle control programs stored in the ROM into the RAM and executes various processings in cooperation with the RAM.

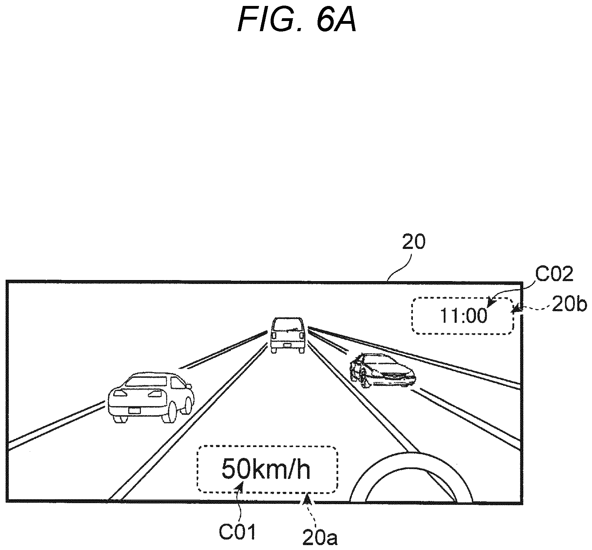

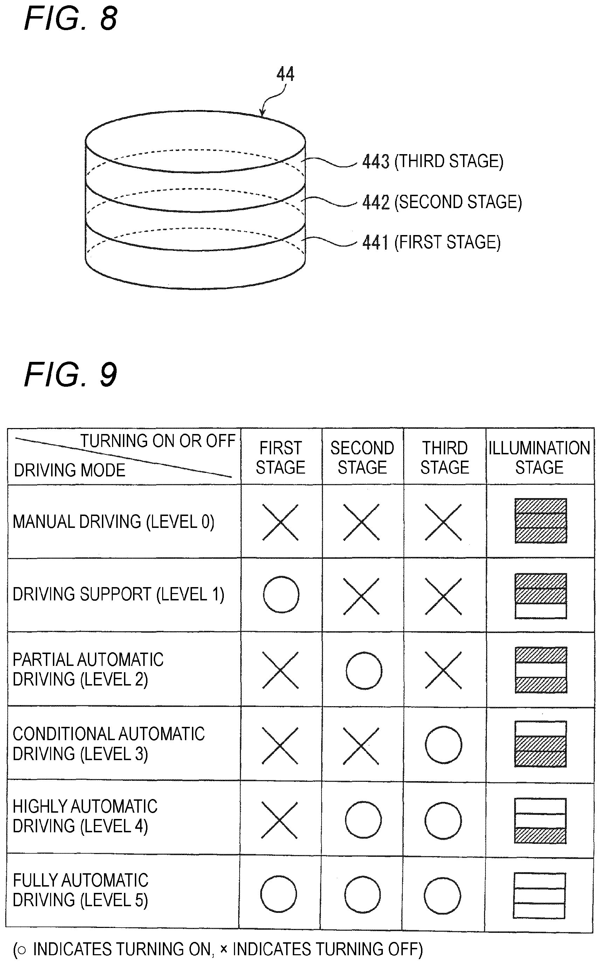

The vehicle controller 3 generates a mode signal indicating a driving mode of the vehicle 1. The vehicle controller 3 transmits the mode signal to the HUD controller 102 of the HUD apparatus 100 and the illumination controller 42 of the illumination apparatus 4. The HUD controller 102 drives the HUD 104 based on the received mode signal and changes contents displayed in the display region 20 so as to correspond to a driving mode of the vehicle 1 (see Figs. 5 and 6A to 6C). On the other hand, the illumination controller 42 changes, based on the received mode signal, an illumination state of the illumination unit 44 so as to correspond to a driving mode of the vehicle 1 (see Fig. 9).

The sensor 5 includes an acceleration sensor, a speed sensor, a gyro sensor, and the like. The sensor 5 detects a traveling state of the vehicle 1 and outputs traveling state information to the vehicle controller 3. The sensor 5 may further include a seating sensor that detects whether the driver sits in the driver seat, a face direction sensor that detects a direction of a face of the driver, and an outside weather sensor that detects an outside weather condition.

The camera 6 is, for example, a camera including an imaging element such as a charge-coupled device (CCD) or a complementary MOS (CMOS). The radar 7 is a millimeter-wave radar, a microwave radar, a laser radar, or the like. The camera 6 and the radar 7 detect a surrounding environment of the vehicle 1 (other vehicles, pedestrians, road shapes, traffic signs, obstacles, and the like) and output surrounding environment information to the vehicle controller 3.

The driving mode switching switch 8 is a switch for switching a driving mode of the vehicle 1. As will be described in detail below, the vehicle 1 has driving modes of all six stages (a manual driving mode of level 0 and automatic driving modes of five stages of levels 1 to 5). The driving mode switching switch 8 is operated, so that a driving mode of the vehicle 1 can be switched (changed).

The GPS 9 obtains current position information of the vehicle 1 and outputs the obtained current position information to the vehicle controller 3. The wireless communication unit 10 receives traveling information of another vehicle around the vehicle 1 from another vehicle and transmits traveling information of the vehicle 1 to another vehicle (inter-vehicle communication). Further, the wireless communication unit 10 receives infrastructure information from infrastructure equipment such as a traffic light and transmits the traveling information of the vehicle 1 to the infrastructure equipment (road-to-vehicle communication). The map information storage unit 11 is an external storage apparatus such as a hard disk drive that stores map information, and outputs the map information to the vehicle controller 3.

When the vehicle 1 travels in the automatic driving mode, the vehicle controller 3 automatically generates, based on the traveling state information, the surrounding environment information, the current position information, the map information, and the like, at least one of a steering control signal, an accelerator control signal, and a brake control signal. The steering actuator 12 receives the steering control signal from the vehicle controller 3 and controls the steering apparatus 13 based on the received steering control signal. The brake actuator 14 receives the brake control signal from the vehicle controller 3 and controls the brake apparatus 15 based on the received brake control signal. The accelerator actuator 16 receives the accelerator control signal from the vehicle controller 3 and controls the accelerator apparatus 17 based on the received accelerator control signal. Accordingly, in the automatic driving mode, the traveling of the vehicle 1 is automatically controlled by the vehicle system 2.

On the other hand, when the vehicle 1 travels in the manual driving mode, the vehicle controller 3 generates the steering control signal, the accelerator control signal, and the brake control signal in accordance with a manual operation of the driver on the accelerator pedal, the brake pedal, and the steering wheel. Accordingly, since the steering control signal, the accelerator control signal, and the brake control signal are generated by the manual operation of the driver in the manual driving mode, the traveling of the vehicle 1 is controlled by the driver.

### (Driving Modes of Vehicle 1)

Next, driving modes of the vehicle 1 will be described. The vehicle 1 has driving modes of all six stages. For example, the driving mode switching switch 8 (see Fig. 3) provided in the vicinity of the steering wheel of the driver seat is operated, so that a driving mode of the vehicle 1 can be switched.

Specifically, the driving modes of the vehicle 1 include the automatic driving mode and the manual driving mode. The automatic driving mode has five stages from level 1 to level 5 depending on a degree of automation (a driving support mode, a partial automatic driving mode, the conditional automatic driving mode, a highly automatic driving mode, and the fully automatic driving mode). Then, the vehicle 1 has the driving modes having all six stages (level 0 to level 5) based on an SAE standard (see Fig. 23), including the manual driving mode (level 0) and the automatic driving mode (level 1 to level 5).

In the fully automatic driving mode (level 5), the vehicle system 2 automatically performs all traveling control of steering control, brake control, and accelerator control. The driver is not in a state where the vehicle 1 can be driven.

In the highly automatic driving mode (level 4), the vehicle system 2 automatically performs all the traveling control of the steering control, the brake control, and the accelerator control. Although the driver is in a state where the vehicle 1 can be driven, the driver does not drive the vehicle 1.

In the conditional automatic driving mode (level 3), the vehicle system 2 automatically performs all the traveling control of the steering control, the brake control, and the accelerator control in a limited situation such as highway traveling. In the limited situation, the driver is not always required to look ahead, that is, monitoring a driving environment is not required.

In the partial automatic driving mode (level 2), for example, a plurality of driver assist functions such as ACC, automatic parking, and lane assisting are simultaneously operated, so that the vehicle system 2 performs the steering control, the brake control, and the accelerator control. For the driver, awareness of always performing driving himself or herself is required.

In the driving support mode (level 1), the vehicle system 2 automatically performs a part of the traveling control of the steering control, the brake control, and the accelerator control. The driver drives the vehicle 1 under the driving support of the vehicle system 2.

On the other hand, in the manual driving mode (level 0), the vehicle system 2 does not automatically perform the traveling control. The driver drives the vehicle 1 without the driving support of the vehicle system 2.

When a driving mode of the vehicle 1 is switched by the driving mode switching switch 8, the vehicle controller 3 switches (changes) the driving mode of the vehicle 1 by six stages from level 0 to level 5 in accordance with an operation of the driver on the driving mode switching switch 8.

When determining that traveling in the automatic driving mode is inappropriate based on information about obstacles on a traveling road detected by the camera 6, the sensor 5, the radar 7 and the like, the vehicle controller 3 switches the driving mode of the vehicle 1 from the automatic driving mode to the manual driving mode.

Further, the driving mode of the vehicle 1 may be automatically switched based on information about an automatic driving and traveling possible section and a traveling-prohibited section where traveling of automatic driving is prohibited, or based on information about outside weather condition. In this case, the vehicle controller 3 switches the driving mode of the vehicle 1 based on these pieces of information. Further, the driving mode of the vehicle 1 may be automatically switched using the seating sensor, the face direction sensor, or the like. In this case, the vehicle controller 3 switches the driving mode of the vehicle 1 based on an output signal from the seating sensor or the face direction sensor.

### (HUD apparatus 100)

Next, the HUD apparatus 100 will be described.

The HUD apparatus 100 is an apparatus that projects various contents (see Fig. 5) on the windshield 1a of the vehicle 1 and displays these contents so as to be superimposed on scenery seen through the display region 20 of the windshield 1a from the driver seat of the vehicle 1. The HUD 104 is configured with a liquid crystal panel, a backlight that transmits through and illuminates the liquid crystal panel, a concave mirror that reflects an image, which is generated by light of the backlight transmitted through the liquid crystal panel, toward the windshield 1a, and the like.

As illustrated in Figs. 2 and 3, the display region 20 is a predetermined rectangular region defined on a path that extends from an eye range ER (see Fig. 2) toward a gaze point on the windshield 1a that reflects light representing the image projected by the HUD apparatus 100. The gaze point is a point in a traveling direction to be gazed by the driver of the vehicle 1, and is, for example, a space in the traveling direction or a preceding vehicle.

As illustrated in Fig. 2, the HUD 104 includes a video projector 105 and an optical member 106.

The video projector 105 is a device that emits and projects light representing various pieces of information. The video projector 105 is, for example, a single liquid crystal projector. The liquid crystal projector is an apparatus that forms a desired video by controlling transmitted light (transmission and blocking of light) for each pixel (picture element) that constitutes the liquid crystal panel. The optical member 106 is provided such that light representing a video from the video projector 105 is projected onto the display region 20 of the windshield 1a with a specific size. The optical member 106 includes a reflecting mirror 106a and a magnifying glass 106b. The reflecting mirror 106a includes at least one mirror and reflects light representing the video from the video projector 105. The magnifying glass 106b magnifies or reduces the light representing the video from the video projector 105.

The HUD apparatus 100 is disposed in a dashboard 1b of the vehicle 1. A light-transmitting cover 1d through which light is transmitted is provided in an opening 1c provided at a position corresponding to the windshield 1a on an upper surface wall of the dashboard 1b.

In the HUD 104, a video that is projected from the video projector 105 and passes through the optical member 106 and the light-transmitting cover 1d is projected onto the windshield 1a. The video projected onto the windshield 1a becomes a virtual image VI formed in front of the vehicle 1 in the eye range ER. For example, light of the video projector (liquid crystal projector) 105 is reflected by the display region 20 and is formed as the virtual image VI in front of the vehicle 1. The driver can visually recognize the virtual image VI projected onto the windshield 1a without moving line of sight from a gaze object that exists on a traveling path of the vehicle 1.

The HUD controller 102 includes a well-known microcomputer mainly including a CPU and a memory. The memory is a semiconductor memory such as a RAM, a ROM, or a flash memory. Contents (see Fig. 5) that can be displayed depending on driving modes of the vehicle 1 are set in advance in the HUD controller 102. The HUD controller 102 drives the HUD 104 so as to execute a HUD display processing corresponding to a driving mode of the vehicle 1 based on various signals (for example, a driving mode signal) obtained via the vehicle controller 3.

That is, the HUD controller 102 generates contents (see Fig. 5) indicating pieces of information based on various pieces of information obtained via the vehicle controller 3 (a vehicle speed, a time point, a driving mode, a video obtained by the camera 6, the sensor 5, the radar 7 or the like, other information, and the like). The HUD controller 102 drives the HUD 104 so as to execute a HUD display processing of displaying predetermined contents corresponding to a driving mode of the vehicle 1 in the display region 20.

For example, Fig. 6A illustrates a HUD display processing when a driving mode of the vehicle 1 is the manual driving mode (level 0). A content C01 indicating a vehicle speed is displayed in a small and horizontally long first display region 20a positioned at a lower center of the display region 20 in a left-right direction. A content C02 indicating a time point is displayed in a small second display region 20b positioned on an upper right side of the display region 20. The HUD controller 102 generates these contents C01 and C02 based on speed information and time point information of the vehicle 1 obtained via the vehicle controller 3. Then, the HUD controller 102 controls the HUD 104 so as to display the contents C01 and C02 in the first display region 20a and the second display region 20b.

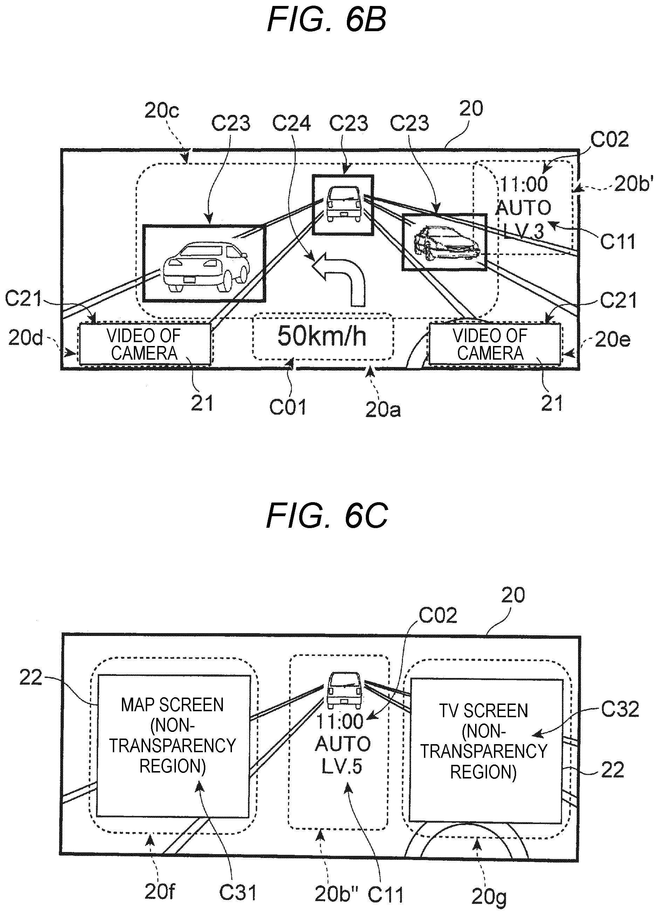

Fig. 6B illustrates a HUD display processing when a driving mode of the vehicle 1 is the conditional automatic driving mode (level 3). Similar to the HUD display processing in a case of the manual driving mode (level 0), the content C01 indicating the vehicle speed is displayed in the first display region 20a positioned at the lower center of the display region 20 in the left-right direction.

The HUD controller 102 generates, based on driving mode information obtained via the vehicle controller 3, a content C11 indicating a driving mode. The content C11 together with the content C02 indicating the time point are displayed in a vertically parallel state in a second display region 20b' that has a medium size and is at an upper right corner in the display region 20.

Contents C23 indicating respective positions of preceding vehicles and an oncoming vehicle and distances from those vehicles and a content C24 indicating course information of the subject vehicle are displayed in a medium size so as to be respectively superimposed on the preceding vehicles and the oncoming vehicle in a third display region 20c that spreads widely in a left-right direction over the entire display region 20. The contents C23 are, for example, marking images having sizes corresponding to the distances from those vehicles. The content C24 is, for example, an arrow image.

Specifically, the HUD controller 102 generates the contents C23 based on videos of the preceding vehicles and the oncoming vehicle imaged by the camera 6 and detection information of the radar 7 that are obtained via the vehicle controller 3. Then, the HUD controller 102 controls the HUD 104 such that the contents C23 are displayed in the third display region 20c respectively in association with the preceding vehicles and the oncoming vehicle.

Further, the HUD controller 102 generates the content C24 based on navigation information obtained via the vehicle controller 3. Then, the HUD controller 102 controls the HUD 104 such that the content C24 is displayed at a lower center of the third display region 20c in a left-right direction.

Further, a fourth display region 20d and a fifth display region 20e are provided on both left and right sides of the first display region 20a that displays the content C01 indicating the vehicle speed. The fourth display region 20d and the fifth display region 20e constitute a screen (back monitor) for displaying contents C21 that are videos of a rear side of a vehicle imaged by the camera 6. That is, in the fourth display region 20d and the fifth display region 20e, light control mirrors 21 that can switch a state between a light-transmitting state and a non-light-transmitting state are provided so as to be laminated on a surface of the windshield 1a on a vehicle interior side. When a voltage is applied to the light control mirror 21, the light control mirror 21 is in the light-transmitting state, and when no voltage is applied, the light control mirror 21 is in the non-light-transmitting state. Therefore, the contents C21, which are the videos of the camera 6 (videos of the rear side of the vehicle) obtained via the vehicle controller 3, are displayed in the fourth display region 20d and the fifth display region 20e (light control mirrors 21 held in the non-light-transmitting state) via the HUD 104.

Similar to a case of the conditional automatic driving mode (level 3), the fourth display region 20d and the fifth display region 20e can be used as back monitors also in the partial automatic driving mode (level 2) where monitoring a driving environment is required. A lower position in the display region 20 at which the fourth display region 20d and the fifth display region 20e are provided is a region in which a hood B (see Figs. 1 and 2) can be seen therethrough when a driver sees the hood B in a general passenger car. Therefore, even when the light control mirrors 21 (fourth display region 20d and fifth display region 20e) are held in the non-light-transmitting state, a view in front of the vehicle that can be seen by the driver is not obstructed.

Fig. 6C illustrates a HUD display processing when a driving mode of the vehicle 1 is the fully automatic driving mode (level 5). A second display region 20b" that spreads widely in an upper-lower direction is provided at a center of the display region 20 in a left-right direction. The second display region 20b" displays the contents C02 and C11 respectively indicating a current time point and a driving mode of the vehicle 1. The HUD controller 102 generates the contents C02 and C11 based on the time point information and the driving mode information of the vehicle 1 that are obtained via the vehicle controller 3.

A sixth display region 20f and a seventh display region 20g that spread widely in an upper-lower direction are provided on both left and right sides of the second display region 20b" in the display region 20. In the sixth display region 20f and the seventh display region 20g, light control mirrors 22 that can switch a state between a light-transmitting state and a non-light-transmitting state are provided so as to be laminated on the surface of the windshield 1a on the vehicle interior side. The sixth display region 20f and the seventh display region 20g are used as screens for displaying contents C31 and C32 indicating a map image and a TV video that are navigation information obtained via the vehicle controller 3.

That is, when the sixth display region 20f and the seventh display region 20g are used as the content display screens, the light control mirrors 22 are held in the non-light-transmitting state, and the contents C31 and C32 are respectively displayed in the sixth display region 20f and the seventh display region 20g via the HUD 104.

The sixth display region 20f and the seventh display region 20g provided with the light control mirrors 22 respectively largely overlap with, for example, the second display region 20b' and the third display region 20c (see Fig. 6B) that require transparency in a driving mode equal to or lower than the level 4. When a HUD display processing is performed with a driving mode of the vehicle 1 being equal to or lower than the level 4, a voltage is applied to the light control mirrors 22 (sixth display region 20f and seventh display region 20g) so as to hold the light control mirrors 22 in a transparent state. Therefore, the sixth display region 20f and the seventh display region 20g do not hinder transparency of the second display region 20b' and the third display region 20c in the driving mode equal to or lower than the level 4.

Even when the fourth display region 20d and the fifth display region 20e provided with the light control mirrors 21 are not used as the screens for displaying the contents C21, that is, when a HUD display processing is performed with a driving mode of the vehicle 1 being equal to or lower than the level 2, the light control mirrors 21 (fourth display region 20d and fifth display region 20e) are held in a transparent state. Therefore, the fourth display region 20d and the fifth display region 20e do not block a view in front of the driver.

The fourth display region 20d and the fifth display region 20e as well as the sixth display region 20f and the seventh display region 20g are provided with the light control mirrors 21 and 22 that can switch a state between a light-transmitting state and a non-light-transmitting state. However, the present invention is not limited thereto. Instead of the light control mirrors 21 and 22, these display regions may be provided with liquid crystal shutters that can switch light-transmitting and non-light-transmitting. That is, the liquid crystal shutter includes a liquid crystal panel in which a vertical polarization filter and a horizontal polarization filter are laminated and integrated so as to face each other with facing transparent electrodes sandwiched therebetween. The facing transparent electrodes have a liquid crystal interposed therebetween. A voltage is applied to the facing electrodes so as to change an arrangement of molecules of the liquid crystal, so that the liquid crystal panel switches a state between a light-transmitting state and a non-light-transmitting state.

### (Contents That Can Be Displayed by HUD Apparatus 100)

Next, with reference to Figs. 5 and 6A to 6C, types of contents that can be displayed by the HUD apparatus 100 depending on driving modes of the vehicle 1 and sizes of display regions of the contents will be described. Figs. 5 and 6A to 6C illustrate contents corresponding to driving modes of the vehicle 1 and the sizes of the display regions of the contents. The types of the contents and the sizes of the display regions of the contents are set in advance by the HUD controller 102.

In the manual driving mode (level 0), for example, the content C01 indicating the vehicle speed and the content C02 indicating the time point can be displayed. In the driving support mode (level 1), for example, the content C11 indicating a current driving mode of the vehicle 1 can be displayed in addition to the contents C01 and C02 that can be displayed in the manual driving mode. In these driving modes (levels 0 and 1), driving by the driver is a prerequisite. Positions and sizes of the display regions 20a and 20b of the contents C01, C02, and C11 are defined so as not to obstruct a view in front of the driver (see Fig. 6A). In the manual driving mode (level 0), the content C11 indicating a driving mode of the vehicle 1 is not displayed (see Fig. 6A). In the driving support mode (level 1), similar to a case of the HUD display processing (see Fig. 6B) of the conditional automatic driving mode (level 3), the content C11 indicating a driving mode is displayed in the second display region 20b' together with the content C02 indicating a time point.

In the partial automatic driving mode (level 2), the conditional automatic driving mode (level 3), and the highly automatic driving mode (level 4), for example, the contents C21, the contents C22, the contents C23, the content C24, and the like can be displayed in addition to the contents C01, C02, C11 that can be displayed in the driving support mode (level 1). The content C21 indicates a video obtained by the in-vehicle camera 6 or sensors. The content C21 is, for example, a video of a rear side of the vehicle imaged by the camera 6. The content C22 indicates an image related to behavior information of a preceding vehicle. The content C23 indicates markings of a preceding vehicle, an oncoming vehicle, a pedestrian, and the like. The content C24 indicates an image indicating an operation of the vehicle such as a predicted course. The content C24 is, for example, an arrow that prompts the subject vehicle to change a lane.

In the automatic driving modes of levels 2 to 4, the vehicle system 2 performs driving, and an obligation of monitoring a driving environment by the driver is relaxed. Therefore, positions and sizes of the display regions 20a, 20b', 20c, 20d, and 20e are defined within a range where a view in front of the driver is not fairly obstructed (see Fig. 6B). That is, restrictions on the positions and the sizes of the display regions 20a, 20b', 20c, 20d, and 20e are relaxed as compared with a case of the driving mode (levels 0 and 1).

In the fully automatic driving mode (level 5), among the contents C01, C02, C11, C21, C22, C23, and C24 that can be displayed in the automatic driving modes of levels 2 to 4, only the contents C02 and C11 considered to be minimum-required are displayed. Then, large display regions (sixth display region and seventh display region) 20f and 20g newly secured by omitting to display all other contents can be used as a monitor screen of a TV or the Internet or a display screen of a navigation map.

Specifically, in the fully automatic driving mode (level 5), the vehicle system 2 drives the vehicle, and the driver does not have an obligation of monitoring a driving environment and dealing with a problem (driving operation). Therefore, the positions and the sizes of the display regions can be defined without considering the view in front of the driver. That is, the contents C21, C22, C23, and C24 such as a video of a rear side of the subject vehicle, behavior information of a preceding vehicle, position and distance information of a preceding vehicle, an oncoming vehicle, a pedestrian, and the like, and lane change support information for the subject vehicle, which are required in the automatic driving modes of levels 2 to 4, are not required in the fully automatic driving mode. Further, the contents C21, C22, C23, and C24 cause the driver to unnecessarily recognize traveling states of other vehicles around and the like including a traveling situation of the vehicle 1, and may rather stress the driver.

Therefore, in the fully automatic driving mode (level 5), among the various contents (see Fig. 5) displayed in the automatic driving modes of levels 2 to 4, as illustrated in Fig. 6C, only the content C02 indicating the current time point and the content C11 indicating a driving mode of the vehicle 1 are displayed in the relatively large second display region 20b" at the center of the display region 20 and no other content is displayed. Instead, the content C31 indicating the navigation map image and the content C32 indicating the TV video can be displayed in the larger sixth display region 20f and the larger seventh display region 20g on left and right sides of the second display region 20b". Particularly, during a period until the driver arrives at a destination, not only the driver but also other passengers can watch the content C32 indicating the TV video.

In the driving modes of levels 0 to 5, contents to be displayed by the HUD apparatus 100 are input and set in advance by the HUD controller 102 for each of the driving modes of levels 0 to 5. If necessary, the driver can appropriately change settings of the HUD controller 102 within a range illustrated in Fig. 5.

### (HUD Display Processing by HUD Controller 102)

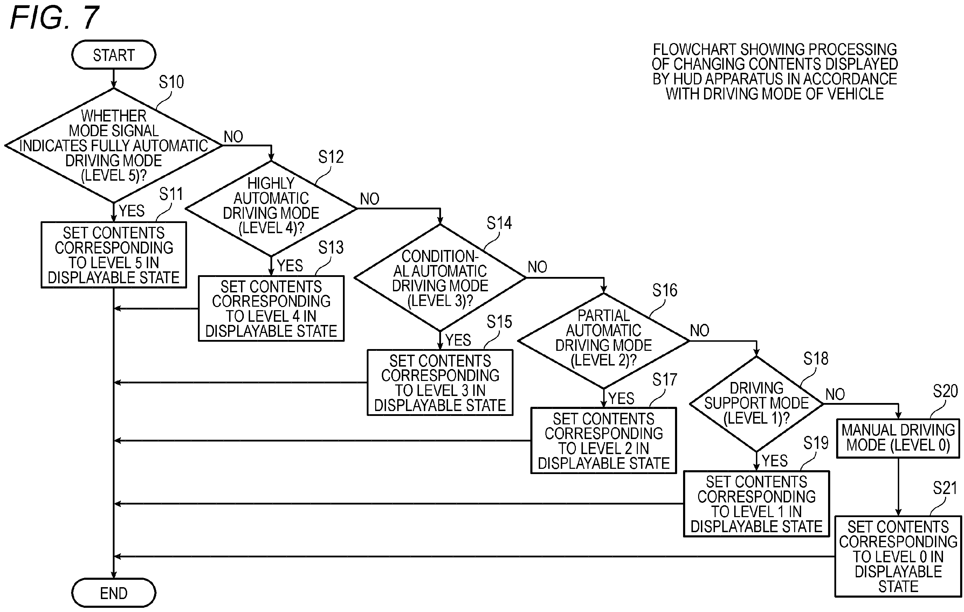

Next, a processing of changing contents to be displayed by the HUD apparatus 100 depending on driving modes of the vehicle 1 will be described with reference to Fig. 7.

First, when receiving a mode signal indicating a driving mode of the vehicle 1 from the vehicle controller 3, the HUD controller 102 determines whether the received mode signal indicates the fully automatic driving mode (step S10). When determining that the mode signal indicates the fully automatic driving mode (YES in step S10), the HUD controller 102 sets the HUD 104 in a state where predetermined contents corresponding to the fully automatic driving mode can be displayed (step S11), and drives the HUD 104 so as to display the predetermined contents.

On the other hand, when determining that the mode signal does not indicate the fully automatic driving mode (NO in step S10), the HUD controller 102 determines whether the mode signal indicates the highly automatic driving mode (step S12). When determining that the mode signal indicates the highly automatic driving mode (YES in step S12), the HUD controller 102 sets the HUD 104 in a state where predetermined contents corresponding to an advanced driving mode can be displayed (step S13), and drives the HUD 104 so as to display the predetermined contents.

On the other hand, when determining that the mode signal does not indicate the highly automatic driving mode (NO in step S12), the HUD controller 102 determines whether the mode signal indicates the conditional automatic driving mode (step S14). Then, when determining that the mode signal indicates the conditional automatic driving mode (YES in step S14), the HUD controller 102 sets the HUD 104 in a state where predetermined contents corresponding to the conditional automatic driving mode can be displayed (step S15), and drives the HUD 104 so as to display the predetermined contents.

On the other hand, when determining that the mode signal does not indicate the conditional automatic driving mode (NO in step S14), the HUD controller 102 determines whether the mode signal indicates the partial automatic driving mode (step S16). Then, when determining that the mode signal indicates the partial automatic driving mode (YES in step S16), the HUD controller 102 sets the HUD 104 in a state where predetermined contents corresponding to the partial automatic driving mode can be displayed (step S17), and drives the HUD 104 so as to display the predetermined contents.

On the other hand, when determining that the mode signal does not indicate the partial automatic driving mode (NO in step S16), the HUD controller 102 determines whether the mode signal indicates the driving support mode (step S18). Then, when determining that the mode signal indicates the driving support mode (YES in step S18), the HUD controller 102 sets the HUD 104 in a state where predetermined contents corresponding to the driving support mode can be displayed (step S19), and drives the HUD 104 so as to display the predetermined contents.

On the other hand, when determining that the mode signal does not indicate the partial automatic driving mode (NO in step S18), the HUD controller 102 determines that the mode signal indicates the manual driving mode (step S20). Then, the HUD 104 is set in a state where predetermined contents corresponding to the manual driving mode can be displayed (step S21) and the HUD 104 is driven so as to display the predetermined contents.

Accordingly, this processing ends. Further, this processing is executed each time the HUD controller 102 receives the mode signal from the vehicle controller 3.

Accordingly, according to the present embodiment, a head-up display apparatus 100 is provided in which, along with switching (changing) of a driving mode of the vehicle 1, contents displayed in the predetermined display region are changed to contents corresponding to the driving mode.

Therefore, the driver of the vehicle 1 can benefit from a current driving mode of the vehicle 1.

### (Illumination Apparatus 4)

Next, the illumination apparatus 4 will be described.

As described above, the illumination apparatus 4 is an apparatus that displays information related to a driving mode of the vehicle toward outside. The illumination unit 44 is disposed on the vehicle body roof of the vehicle 1 and emits light to an entire periphery (360 degrees) of the illumination unit 44 in a horizontal direction (see Fig. 1).

The illumination controller 42 (see Fig. 4) is configured with an electronic control unit (ECU). The electronic control unit is electrically connected to a power supply (not shown). The electronic control unit includes a microcontroller including a processor such as a CPU and an MPU and a memory such as a ROM and a RAM, and includes other electronic circuits (for example, a drive circuit such as an LED driver).

Further, as illustrated in an enlarged view in Fig. 8, the illumination unit 44 has a structure in which illumination unit portions 441, 442, and 443 are laminated and integrated into three vertical stages. The illumination unit portions 441, 442, and 443 respectively house light-emitting elements such as LEDs or lasers as light sources (not shown) and emit light in a peripheral direction. Depending on driving modes of the vehicle, the illumination controller 42 controls turning on or off of the illumination unit portions 441, 442, and 443 so as to change an illumination state of the illumination unit 44 (see Fig. 9).

Accordingly, the illumination unit 44 can present information indicating the driving mode of the vehicle 1 around the entire periphery of the vehicle 1 in the horizontal direction toward the outside of the vehicle 1. Particularly, the illumination apparatus 4 can present information related to the driving mode to a pedestrian, another vehicle, or the like around the vehicle 1. In the present embodiment, although the illumination unit 44 is disposed on the vehicle body roof as an example, an arrangement position and a shape of the illumination unit 44 are not particularly limited. For example, the illumination unit 44 may be disposed on a vehicle body side surface of the vehicle 1 or a vehicle body bottom surface that faces a road surface.

### (Processing of Illumination Controller 42)

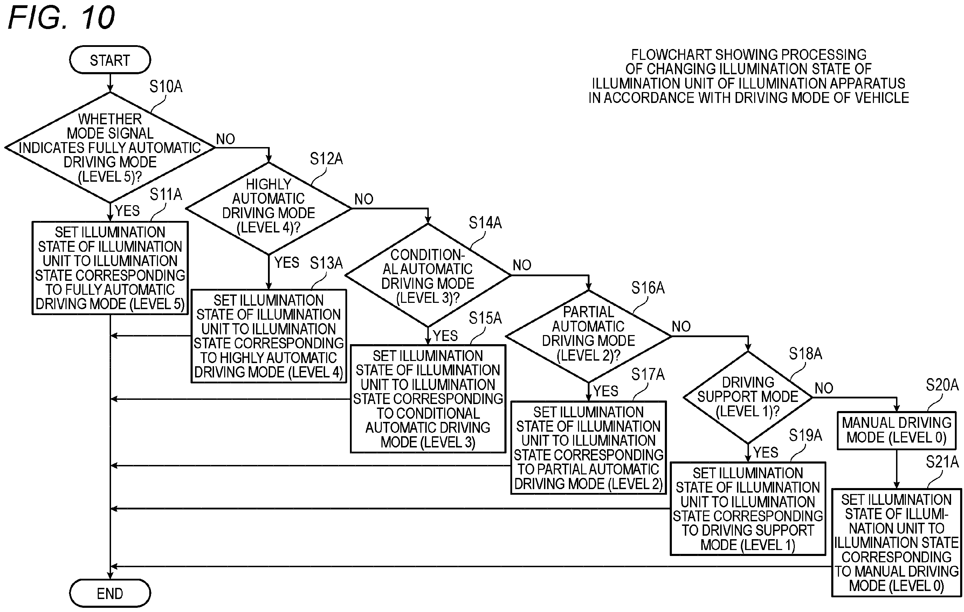

Next, a processing of changing an illumination state of the illumination unit 44 depending on driving modes of the vehicle 1 by the illumination controller 42 will be described with reference to Fig. 10.

First, when receiving a mode signal indicating a driving mode of the vehicle 1 from the vehicle controller 3, the illumination controller 42 determines whether the received mode signal indicates the fully automatic driving mode (step S10A). Then, when determining that the mode signal indicates the fully automatic driving mode (YES in step S10A), the illumination controller 42 sets an illumination state of the illumination unit 44 to an illumination state corresponding to the fully automatic driving mode (selects a light source to be turned on) (step S11A), and causes all the illumination unit portions 441, 442, and 443 of the three vertical stages of the illumination unit 44 to be illuminated (turned on) so as to emit light (see Figs. 8 and 9).

On the other hand, when determining that the mode signal does not indicate the fully automatic driving mode (NO in step S10A), the illumination controller 42 determines whether the mode signal indicates the highly automatic driving mode (step S12A).

Then, when determining that the mode signal indicates the highly automatic driving mode (YES in step S12A), the illumination controller 42 sets the illumination state of the illumination unit 44 to an illumination state corresponding to the highly automatic driving mode (selects a light source to be turned on) (step S13A), and causes the illumination unit portions 442 and 443 of upper two stages of the illumination unit 44 to be illuminated (turned on) so as to emit light (see Figs. 8 and 9).

On the other hand, when determining that the mode signal does not indicate the highly automatic driving mode (NO in step S 12A), the illumination controller 42 determines whether the mode signal indicates the conditional automatic driving mode (step S14A). When determining that the mode signal indicates the conditional automatic driving mode (YES in step S14A), the illumination controller 42 sets the illumination state of the illumination unit 44 to an illumination state corresponding to the conditional automatic driving mode (selects a light source to be turned on) (step S15A), and causes the illumination unit portion 443 of an uppermost stage of the illumination unit 44 to be illuminated (turned on) so as to emit light (see Figs. 8 and 9).

On the other hand, when determining that the mode signal does not indicate the conditional automatic driving mode (NO in step S 14A), the illumination controller 42 determines whether the mode signal indicates the partial automatic driving mode (step S16A). Then, when determining that the mode signal indicates the partial automatic driving mode (YES in step S16A), the illumination controller 42 sets the illumination state of the illumination unit 44 to an illumination state corresponding to the partial automatic driving mode (selects a light source to be turned on) (step S17A), and causes the illumination unit portion 442 of a middle stage of the illumination unit 44 to be illuminated (turned on) so as to emit light (see Figs. 8 and 9).

On the other hand, when determining that the mode signal does not indicate the partial automatic driving mode (NO in step S16A), the illumination controller 42 determines whether the mode signal indicates the driving support mode (step S18A). Then, when determining that the mode signal indicates the driving support mode (YES in step S18A), the illumination controller 42 sets the illumination unit 44 in an illumination state corresponding to the driving support mode (selects a light source to be turned on) (step S19A), and causes the illumination unit portion 441 of a lowermost stage of the illumination unit 44 to be illuminated (turned on) so as to emit light (see Figs. 8 and 9).

On the other hand, when determining that the mode signal does not indicate the driving support mode (NO in step S18A), the illumination controller 42 determines that the mode signal indicates the manual driving mode (step S20A). Then, the illumination controller 42 sets the illumination unit 44 in an illumination state corresponding to the manual driving mode (selects no light source to be turned on) (step S21A), and causes all the illumination unit portions 441, 442, and 443 of the three vertical stages of the illumination unit 44 to be turned off (see Figs. 8 and 9).

Accordingly, this processing ends. Further, this processing is executed each time the illumination controller 42 receives the mode signal from the vehicle controller 3.

Accordingly, according to the present embodiment, contents displayed in the predetermined display region 20 of the windshield 1a are changed in the vehicle interior depending on driving modes of the vehicle 1. Therefore, the driver can see the contents corresponding to the driving mode.

Further, an illumination state of the illumination unit 44 is changed depending on driving modes of the vehicle 1 to the outside of the vehicle. Therefore, a pedestrian, another vehicle, and the like around the vehicle 1 can visually recognize whether a driving mode of the vehicle 1 is the fully automatic driving mode, the highly automatic driving mode, the conditional automatic driving mode, the partial automatic driving mode, the driving support mode, or the manual driving mode.

### (Second Embodiment)

Hereinafter, a second embodiment of the present invention (hereinafter, referred to as the second embodiment) will be described with reference to the drawings. Descriptions of members having the same reference numerals as members that are already described in the description of the first embodiment will be omitted for convenience of description.

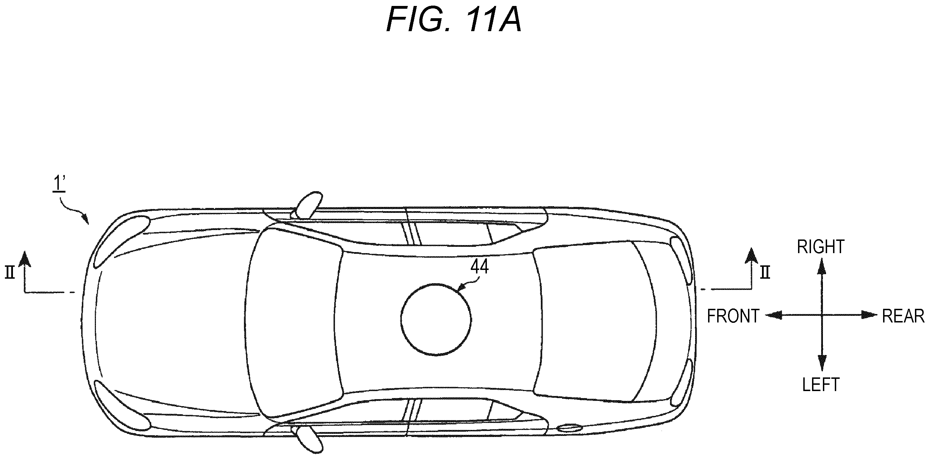

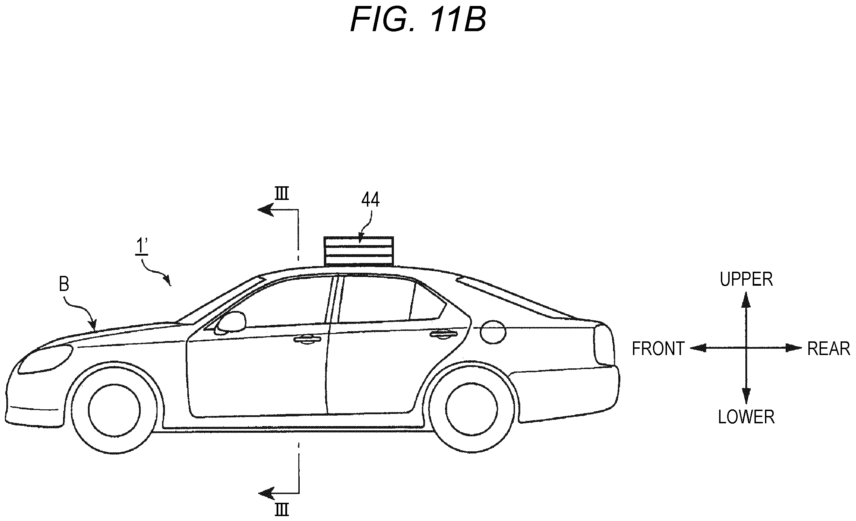

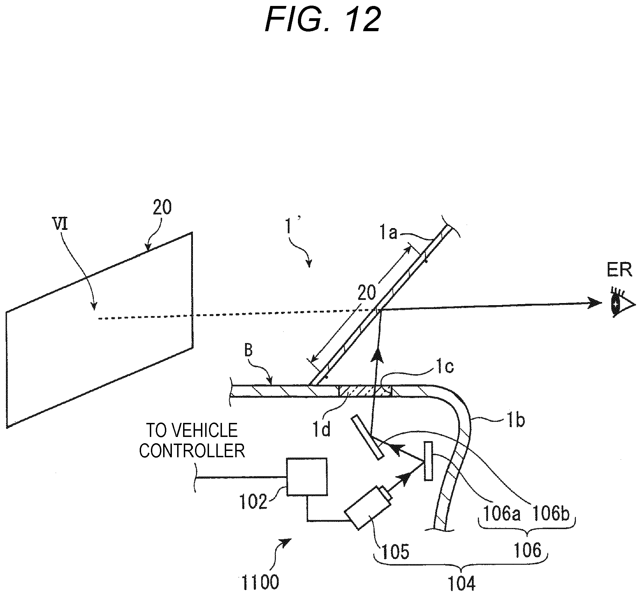

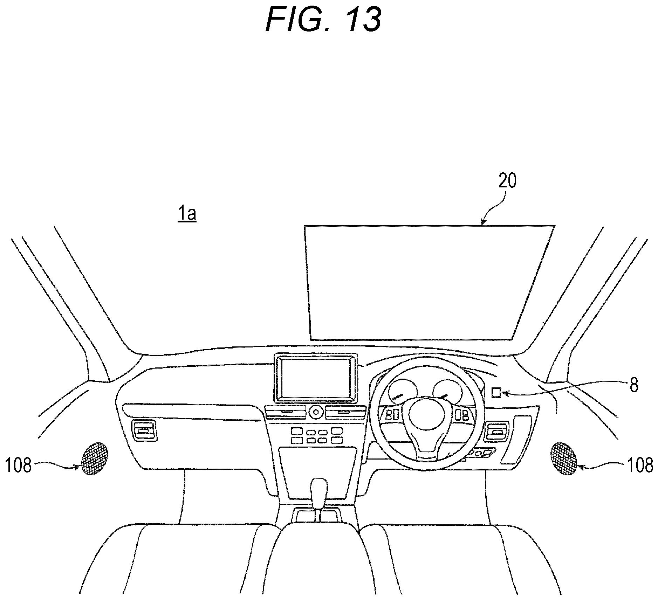

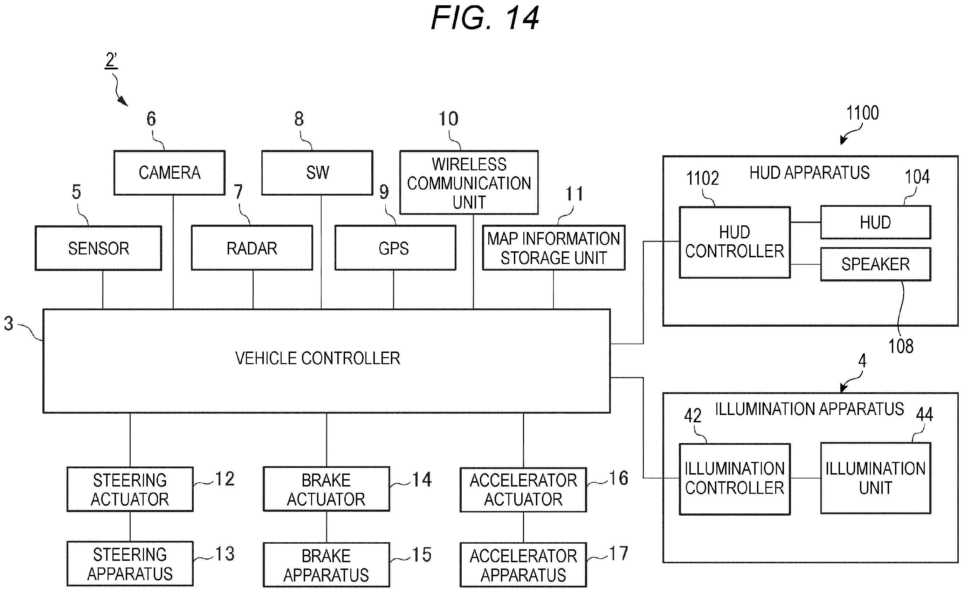

Figs. 11A and 11B illustrate a vehicle 1' on which a HUD apparatus 1100 according to the second embodiment is mounted. Fig. 12 is a vertical cross-sectional view of a periphery of a driver seat of the vehicle (cross-sectional view taken along a line II-II illustrated in Fig. 11A) and illustrates the configuration of the HUD apparatus 1100. Fig. 13 is a perspective view when the driver seat of the vehicle is viewed from a rear side of a vehicle interior (perspective view taken along a line III-III illustrated in Fig. 11B). Fig. 14 is a block diagram illustrating the configuration of an entire vehicle system of the vehicle 1' that is an automatic driving vehicle.

In these drawings, the vehicle 1' is an automobile that can travel in an automatic driving mode (hereinafter, also referred to as automatic driving vehicle). The vehicle 1' includes the HUD apparatus 1100 and the illumination apparatus 4. The vehicle 1' of the second embodiment is different from the vehicle 1 of the first embodiment in that the HUD apparatus 1100 is provided instead of the HUD apparatus 100. The HUD apparatus 1100 is an apparatus that displays predetermined contents (image) in the predetermined display region 20 provided in front of a driver who sits in the driver seat. The displayed contents mainly indicate various pieces of traveling information effective for a driving operation of the driver. Hereinafter, "displaying predetermined contents in a predetermined display region" is referred to as a "HUD display processing". The predetermined display region 20 is, for example, a predetermined region of the windshield 1a. The HUD apparatus 1100 includes a HUD controller 1102, the HUD 104, and speakers 108 (see Figs. 12, 13, and 14). The HUD apparatus 1100 of the second embodiment is different from the HUD apparatus 100 of the first embodiment in that the speakers 108 are provided. The illumination apparatus 4 is an apparatus that displays information indicating a driving mode of the vehicle 1' toward outside of the vehicle. The illumination apparatus 4 includes the illumination controller 42 and the illumination unit 44. The illumination unit 44 is disposed on a vehicle body roof of the vehicle 1' (see Figs. 11 and 14).

### (Vehicle System 2' of Automatic Driving Vehicle)

First, a vehicle system 2' adopted in the vehicle 1' will be described with reference to Fig. 14. As illustrated in Fig. 14, the vehicle system 2' includes the vehicle controller 3, the HUD apparatus 1100, the illumination apparatus 4, the sensor 5, the camera 6, the radar 7, the driving mode switching switch 8, the global positioning system (GPS) 9, the wireless communication unit 10, and the map information storage unit 11. Further, the vehicle system 2 includes the steering actuator 12, the steering apparatus 13, the brake actuator 14, the brake apparatus 15, the accelerator actuator 16, and the accelerator apparatus 17.

The vehicle controller 3 controls traveling of the vehicle 1'. The vehicle controller 3 is configured with, for example, an electronic control unit (ECU). The electronic control unit includes a microcontroller including a processor and a memory, and other electronic circuits (for example, a transistor). The processor includes, for example, a central processing unit (CPU), a micro processing unit (MPU), and/or a graphics processing unit (GPU). The memory includes a read only memory (ROM) that stores various vehicle control programs (for example, an artificial intelligence (AI) program for automatic driving), and a random access memory (RAM) that temporarily stores various pieces of vehicle control data. The processor loads a program specified from the various vehicle control programs stored in the ROM into the RAM and executes various processings in cooperation with the RAM.

The vehicle controller 3 generates a mode signal indicating a driving mode of the vehicle 1'. The vehicle controller 3 transmits the mode signal to the HUD controller 1102 of the HUD apparatus 1100 and the illumination controller 42 of the illumination apparatus 4. The HUD controller 1102 drives the HUD 104 based on the received mode signal, changes contents displayed in the display region 20 so as to correspond to a driving mode of the vehicle 1' (see Figs. 5 and 6A to 6C), and generates a desired sound via the speakers 108 as necessary.

The configurations of other components of the vehicle system 2' are the same as those of other components of the vehicle system 2 of the first embodiment, and descriptions thereof are omitted for convenience of description. Further, the configurations of components other than the speakers 108 of the HUD apparatus 1100 and contents that can be displayed are the same as those of the HUD apparatus 100 of the first embodiment, and descriptions thereof are omitted for convenience of description. Further, a HUD display processing of the HUD controller 1102 is the same as the HUD display processing of the HUD controller 102 of the first embodiment, and a description thereof is omitted for convenience of description.

### (HUD Display Processing by HUD Controller 1102 When Changing Driving Mode of Vehicle)

Next, a HUD display processing by the HUD controller 1102 of the HUD apparatus 1100 when changing a driving mode of the vehicle 1' will be described.

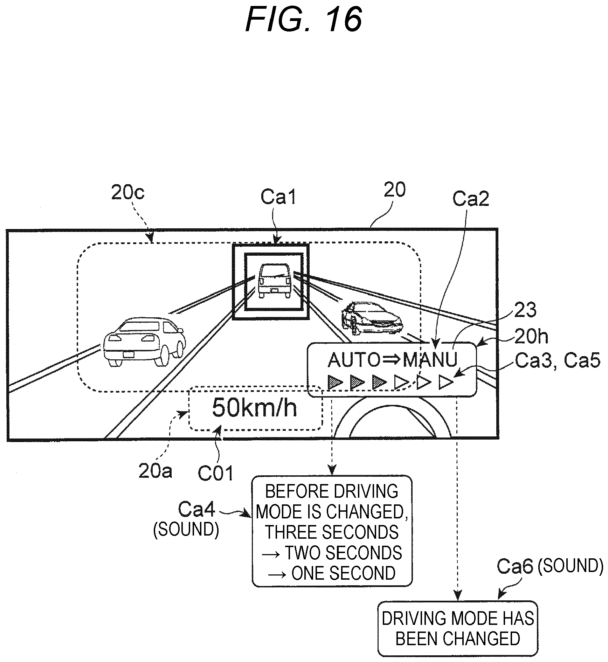

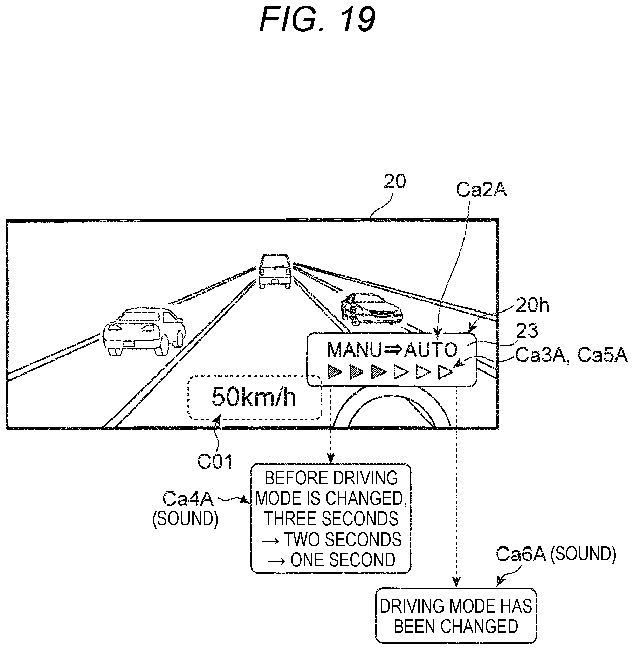

As described in the first embodiment, the HUD controller 1102 of the HUD apparatus 1100 executes a HUD display processing of displaying predetermined contents corresponding to a driving mode of the vehicle 1' (see Fig. 5) in the display region 20 (see Figs. 6A, 6B, and 6C). In the second embodiment, when changing a driving mode of the vehicle 1', the HUD controller 1102 executes the HUD display processing (see Figs. 16 and 19) of displaying contents Ca2 and Ca2A, a content Ca1, contents Ca5 and Ca5A at predetermined positions in the display region 20 and generating predetermined sounds Ca4, Ca4A, Ca6, and Ca6A via the speakers 108. The contents Ca2 and Ca2A indicate notices of change in a driving mode. The content Ca1 indicates a reason for the change in the driving mode. The contents Ca5 and Ca5A indicate confirmations of the change in the driving mode. For example, as illustrated in Figs. 11A and 11B, the speakers 108 are provided on doors on left and right sides of the driver seat.

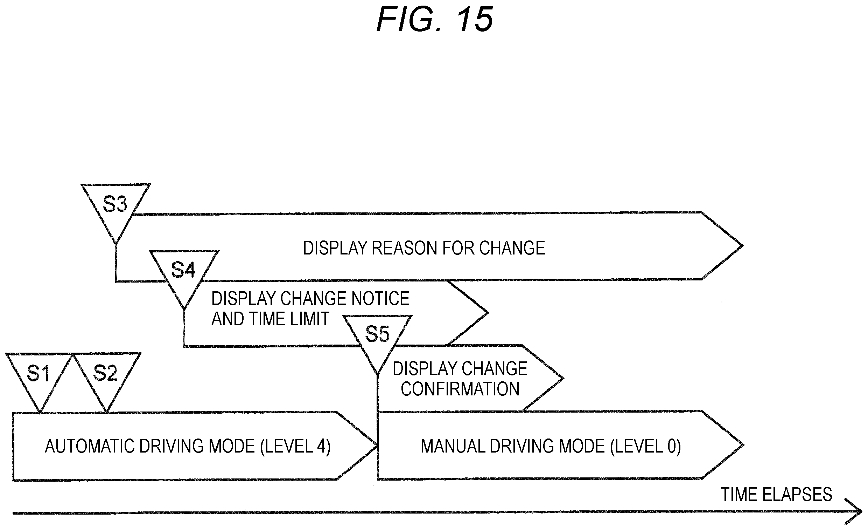

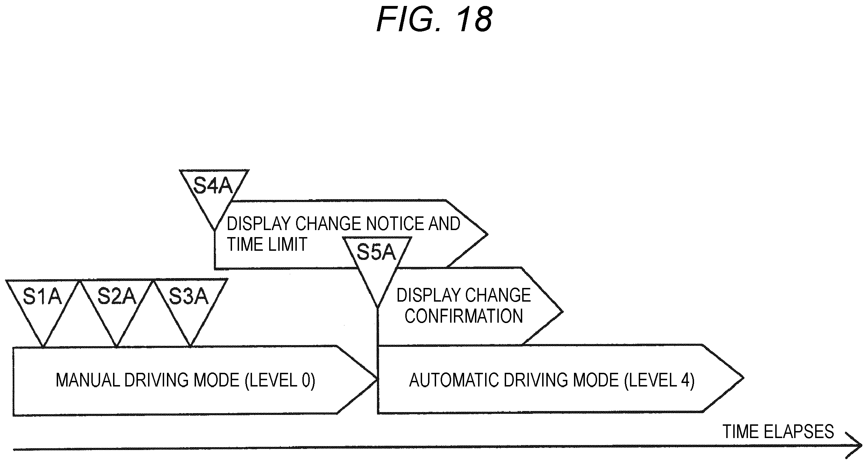

Figs. 15 to 17 illustrate a HUD display processing when a driving mode of the vehicle 1' is automatically changed from the highly automatic driving mode (level 4) to the manual driving mode (level 0), that is, when a driving mode is changed regardless of a will of the driver. Figs. 18 to 20 illustrate a HUD display processing when the driver manually changes a driving mode of the vehicle 1' from the manual driving mode (level 0) to the highly automatic driving mode (level 4).

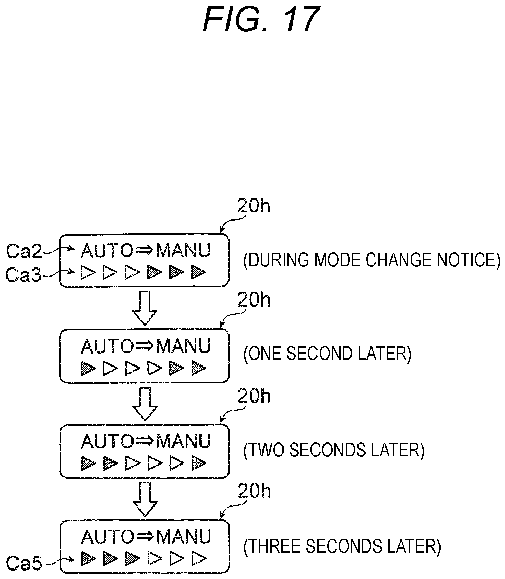

First, the former HUD display processing will be described with reference to Figs. 15 to 17. Fig. 15 illustrates in time series the HUD display processing when the driving mode of the vehicle 1' is automatically changed. Fig. 16 illustrates contents to be displayed in the display region 20 when the driving mode of the vehicle 1' is changed. Fig. 17 is a diagram illustrating the contents that indicate a time limit after a mode change notice is displayed and before the driving mode is changed.

In Fig. 15, when the vehicle 1' travels in the highly automatic driving mode (level 4), in a case where the camera 6, the sensor 5, and the like detect an obstacle (for example, an accident vehicle) on a route of the vehicle 1', information about the obstacle (a position, a distance, a size, and the like of the obstacle) is sent to the vehicle controller (in-vehicle AI) 3 (step S1). The vehicle controller (in-vehicle AI) 3 determines whether it is appropriate to continue traveling in the current driving mode (level 4) based on the sent information about the obstacle (step S2). Then, when determining that it is inappropriate to continue traveling in the current driving mode, the vehicle controller (in-vehicle AI) 3 first determines to change the driving mode to the manual driving mode and generates a mode signal for setting the driving mode of the vehicle 1' to the manual driving mode. Second, a time required for a period from traveling without changing the driving mode until colliding with an obstacle is calculated, and a required time signal is generated. Then, the vehicle controller (in-vehicle AI) 3 transmits the required time signal together with the mode signal to the HUD controller 1102 of the HUD apparatus 1100.

On the other hand, the HUD controller 1102 of the HUD apparatus 1100 generates the content Ca1, the content Ca2, the content Ca3, the sound Ca4, the content Ca5, and the sound Ca6 based on the mode signal, the required time signal before a collision, and other information that are sent from the vehicle controller 3. The content Ca1 indicates an obstacle that is a reason for change in a driving mode. The content Ca1 is, for example, a marking image. The content Ca2 indicates a notice of change to the manual driving mode. The content Ca3 indicates a time limit after the mode change notice is displayed and before the driving mode is actually changed. The sound Ca4 indicates the time limit before the driving mode is changed. The content Ca5 indicates that the driving mode has been changed to the manual driving mode. The sound Ca6 confirms the change to the manual driving mode.

Fig. 16 illustrates the contents Ca1, Ca2, Ca3, and Ca5 and the sounds Ca4 and Ca6 generated by the HUD controller 1102. The content Ca1, which indicates the obstacle that is the reason for the change in the driving mode, is configured with a double rectangular image indicating a distance and a position from the vehicle 1', and is displayed in the third display region 20c in the content display region 20 so as to be superimposed on the obstacle. For example, a size of the image is inversely proportional to a distance from the vehicle 1' to the obstacle, and the closer the obstacle is, the larger the image becomes.

The content Ca2 that is the mode change notice display indicates "AUTO → MANUAL" indicating a notice of change from the highly automatic driving mode to the manual driving mode, and is displayed in an eighth display region 20h at a center in an upper-lower direction to a right side of the display region 20.

Similar to the fourth display region 20d, the fifth display region 20e, the sixth display region 20f, and the seventh display region 20g, in the eighth display region 20h that displays the contents Ca2, Ca3, and Ca5, the light control mirror 23 that can switch a state between a light-transmitting state and a non-light-transmitting state is provided so as to be laminated on the surface of the windshield 1a on the vehicle interior side. The eighth display region 20h is used as a screen for displaying these contents Ca2, Ca3, and Ca5 via the HUD 104.

The content Ca3, which indicates the time limit (for example, 3 seconds) before the driving mode is changed, is a display form in which three adjacent light-emitting portions to a left side among all six light-emitting portions adjacent to each other on left and right sides appear to be turned on simultaneously. The content Ca5 indicating that the driving mode has been changed to the manual driving mode is a display form in which three adjacent light-emitting portions to a right side among all the six light-emitting portions appear to be turned on simultaneously. As illustrated in Figs. 16 and 17, the content Ca3 becomes a display form (corresponding to the content Ca5) in which, for example, one light-emitting portion is moved to the right side every one second, and after three seconds that is the time limit, the three adjacent light-emitting portions to the right side among all the six light-emitting portions appear to be turned on simultaneously. The content Ca3 indicating the time limit is displayed in the eighth display region 20h together with the content Ca2 indicating the mode change notice.

The sound content Ca4 indicating the time limit before the driving mode is changed may be, for example, a sound saying that "the driving mode will be changed to the manual driving mode in 3 seconds". Further, the content Ca4 may be a sound saying "3 seconds, 2 seconds, and 1 second before the "driving mode" is changed to the manual driving mode" (see Fig. 16).

The content Ca5 indicating that the driving mode has been changed to the manual driving mode after the time limit has elapsed is, as described above, a display form in which the three adjacent light-emitting portions to the right side among all the six light-emitting portions adjacent to each other on the left and right sides appear to be turned on simultaneously. The sound Ca6 confirming that the driving mode has been changed is, for example, a sound saying that "the driving mode has been changed to the manual driving mode" (see Fig. 16).

In step S3 to step S5 illustrated in Fig. 15, the HUD controller 1102 executes a HUD display processing of displaying predetermined contents in the eighth display region 20h via the HUD 104 and outputting a predetermined sound via the speakers 108.

That is, in step S3, the content (marking image) Ca1 indicating the obstacle that is the reason for the change in the driving mode of the vehicle is displayed in the third display region 20c via the HUD 104.

Next, in step S4, the content (mode change notice display) Ca2 indicating the notice of the change to the manual driving mode and the content Ca3 indicating the time limit before the driving mode is changed are displayed in the eighth display region 20h via the HUD 104. Further, the sound Ca4 indicating the time limit is output via the speakers 108.

Finally, in step S5, the content Ca5 indicating the confirmation of the change of the driving mode of the vehicle 1' to the manual driving mode is displayed in the eighth display region 20h via the HUD 104. Further, the sound Ca6 indicating the confirmation of the change to the manual driving mode is output via the speakers 108.

Since it is important to notify the driver as soon as possible, the contents Ca2, Ca3, and Ca5 indicating the information about the change in the driving mode, as illustrated in Fig. 16, are displayed in the eighth display region 20h, which is provided relatively large at the center in the upper-lower direction to the right side of the content display region 20, in the vicinity of the eye range ER of the driver, within a range where a view in front of the driver is not obstructed.

Next, the HUD display processing when the driver operates the driving mode switching switch 8 so as to change a driving mode of the vehicle 1' from the manual driving mode (level 0) to the highly automatic driving mode (level 4) will be described with reference to Figs. 18, 19, and 20.

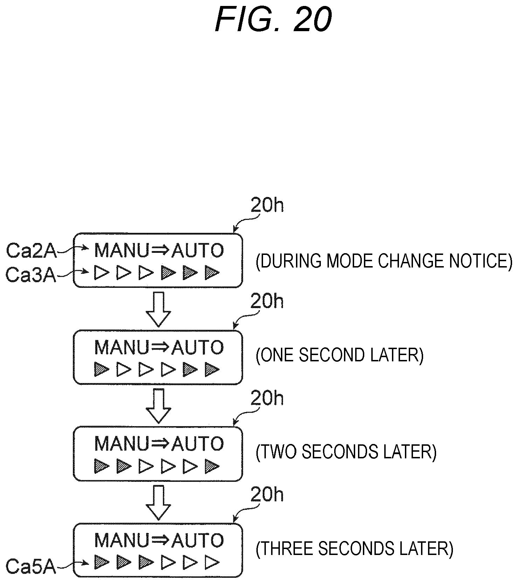

Fig. 18 illustrates in time series the HUD display processing when the driving mode of the vehicle 1' is manually changed. Fig. 19 illustrates the contents to be displayed in the display region 20 when the driving mode of the vehicle 1' is changed. Fig. 20 is a diagram illustrating the contents that indicate a time limit after a mode change notice is displayed and before the driving mode is changed.

In Fig. 18, when a current driving mode of the vehicle 1' is set to the manual driving mode (level 0), the driver determines to change the driving mode of the vehicle 1' to the highly automatic driving mode (level 4) (step S1A), and operates the driving mode switching switch 8 to change the driving mode of the vehicle 1' to the highly automatic driving mode (step S2A). Then, a signal indicating that the driving mode of the vehicle 1' is to be changed to the manual driving mode is input to the vehicle controller (in-vehicle AI) 3. Then, the vehicle controller (in-vehicle AI) 3 determines whether it is appropriate to change a driving mode from the current manual driving mode (level 0) to the highly automatic driving mode (level 4) based on information sent from the driving mode switching switch 8 (step S3A). For example, in a case where the driving mode is changed to the highly automatic driving mode (level 4) while the vehicle 1' is traveling, it is difficult for the driver to accelerate or decelerate and operate a steering wheel. Therefore, the vehicle controller (in-vehicle AI) 3 determines that it is inappropriate to change the driving mode while traveling and determines that it is appropriate to change the driving mode, for example, only while the vehicle is stopped.

Then, when determining that it is appropriate to change the driving mode of the vehicle 1' to the highly automatic driving mode (level 4), the vehicle controller (in-vehicle AI) 3 determines to change the driving mode to the highly automatic driving mode, generates a mode signal for setting the driving mode of the vehicle 1' to the highly automatic driving mode (level 4), and transmits the mode signal to the HUD controller 1102 of the HUD apparatus 1100.

On the other hand, the HUD controller 1102 of the HUD apparatus 1100 generates the content Ca2A, the content Ca3A, the sound Ca4A, the content Ca5A and the sound Ca6A based on the mode signal and other information sent from the vehicle controller 3 (step S4A). The content Ca2A indicates a notice of change to the highly automatic driving mode (level 4). The content Ca3A indicates a time limit before a driving mode is changed. The sound Ca4A indicates the time limit before the driving mode is changed. The content Ca5A indicates that the driving mode has been changed to the highly automatic driving mode. The sound Ca6A confirms the change to the highly automatic driving mode.

The content Ca2 indicating the notice of the change from the manual driving mode to the highly automatic driving mode indicates "MANUAL → AUTO", and is displayed in the eighth display region 20h at a center in an upper-lower direction to a right side of the content display region 20 (see Fig. 19).

The content Ca3A indicating the time limit (for example, three seconds) before the driving mode is changed is a display form in which three adjacent light-emitting portions to a left side among all six light-emitting portions adjacent to each other on left and right sides appear to be turned on simultaneously. The content Ca5A indicating that the driving mode has been changed to the highly automatic driving mode is a display form in which three adjacent light-emitting portions to a right side among all the six light-emitting portions appear to be turned on simultaneously. As illustrated in Figs. 19 and 20, the content Ca3A becomes a display form (corresponding to the content Ca5A) in which, for example, one light-emitting portion is moved to the right side every one second, and after three seconds that is the time limit, the three adjacent light-emitting portions to the right side among all the six light-emitting portions appear to be turned on simultaneously. The content Ca3A indicating the time limit is displayed in the eighth display region 20h together with the content Ca2A indicating the mode change notice.

The sound content Ca4A indicating the time limit before the driving mode is changed is, for example, a sound saying that "the driving mode will be changed to the highly automatic driving mode in three seconds". Further, the content Ca4A may be a sound saying "3 seconds, 2 seconds, and 1 second before the "driving mode" is changed to the highly automatic driving mode".

The content Ca5A indicating that the driving mode has been changed to the highly automatic driving mode after the time limit has elapsed is, as described above, a display form in which the three adjacent light-emitting portions to the right side among all the six light-emitting portions adjacent to each other on the left and right sides appear to be turned on simultaneously. The sound Ca6A confirming that the driving mode has been changed is, for example, a sound saying that "the driving mode has been changed to the highly automatic driving mode".

Then, in step S4A, the HUD apparatus 1100 displays, via the HUD 104, the content Ca2A indicating the notice of the change to the highly automatic driving mode and the content Ca3A indicating the time limit before the driving mode is changed, in the eighth display region 20h. Further, the sound Ca4A indicating the time limit is output via the speakers 108. Finally, in step S5A, the content Ca5A indicating that the driving mode has been changed to the highly automatic driving mode after the time limit has elapsed is displayed in the eighth display region 20h via the HUD 104. Further, the sound Ca6A indicating the confirmation of the change to the highly automatic driving mode is output via the speakers 108.

In the embodiment described above, a case where the driving mode of the vehicle 1 is changed from the highly automatic driving mode (level 4) to the manual driving mode (level 0), or from the manual driving mode (level 0) to the highly automatic driving mode (level 4) has been described. However, the present invention can also be similarly applied to a case where the driving mode of the vehicle 1 is changed within a range of all six stages (level 0 to level 5).

Particularly, it is desirable to display the contents corresponding to the automatic driving modes of level 1 to level 5 as "AUTO LV3" and "AUTO LV5" whose degrees of automation can be recognized as illustrated in Figs. 6B and 6C instead of simply displaying the contents only as "AUTO" as illustrated in Figs. 15, 16, 19, and 20.

### (Third Embodiment and Fourth Embodiment)

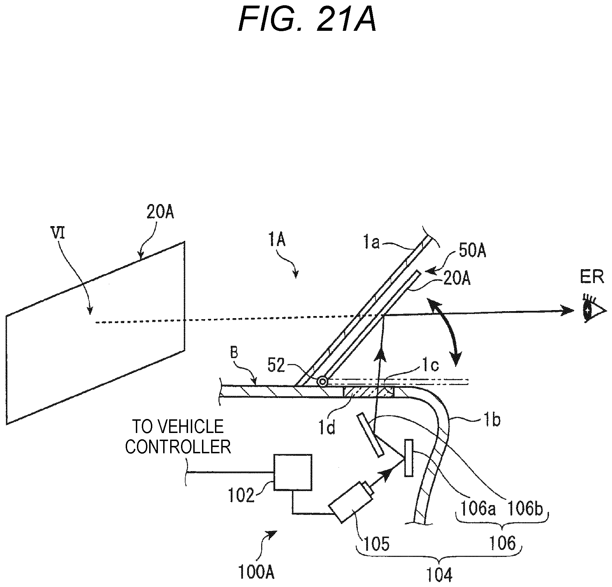

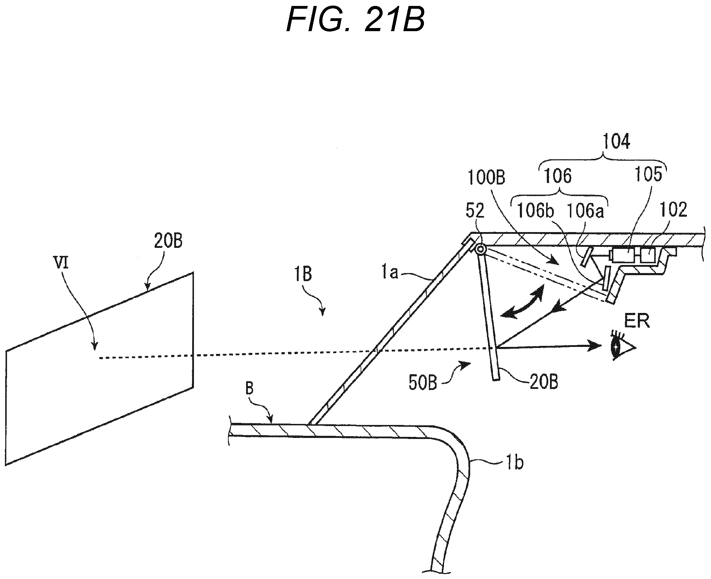

Figs. 21A and 21B are views illustrating the configurations of HUD apparatuses 100A and 100B according to a third embodiment and a fourth embodiment of the present invention and are views corresponding to Fig. 2 illustrating the configuration of the HUD apparatus 100 according to the first embodiment.

The HUD apparatuses 100A and 100B according to the third and the fourth embodiments are referred to as combiner types. In the HUD apparatuses 100A and 100B, rectangular transparent plastic disks 50A and 50B can be tilted (swung) in a front-rear direction as represented by arrows with respect to rotation fulcrums 52 provided on vehicles 1A and 1B. The transparent plastic disks 50A and 50B are referred to as combiners. The rotation fulcrum 52 is provided on the dashboard 1b of a driver seat of the vehicle 1A or an inner side of a ceiling of the vehicle 1B.

The combiners 50A and 50B each are tilted (swung) with respect to the rotation fulcrum 52 so as to be erected on a path directed from the eye range ER to a gaze point. Predetermined contents are projected onto predetermined display regions 20A and 20B of the combiners 50A and 50B by the HUD apparatuses 100A and 100B disposed on an inner side of the dashboard 1b or the inner side of the ceiling of the driver seat. Similar to the HUD apparatus 100 according to the first embodiment, the HUD apparatuses 100A and 100B each are configured with the HUD controller 102 and the HUD 104. Further, similar to the HUD apparatus 1100 according to the second embodiment, the HUD apparatuses 100A and 100B each may include the HUD controller 1102, the HUD 104, and a speaker (not shown).

That is, the HUD apparatus 100 according to the first embodiment and the HUD apparatus 1100 according to the second embodiment have a structure in which the predetermined contents are projected onto the predetermined display region 20 of the windshield 1a, and the projected contents are displayed so as to be superimposed on scenery seen through the display region 20 of the windshield 1a from the driver seat of the vehicle 1. On the contrary, the HUD apparatuses 100A and 100B according to the third embodiment and the fourth embodiment have a structure in which the predetermined contents are projected onto the predetermined display regions 20A and 20B of the combiners 50A and 50B instead of the windshield 1a, and the projected contents are displayed so as to be superimposed on scenery seen through the display regions 20A and 20B of the combiners 50A and 50B from driver seats of the vehicles 1A and 1B. Similar to the HUD apparatus 1100 according to the second embodiment, the HUD apparatuses 100A and 100B may have a structure in which a predetermined sound is generated via the speakers 108 as necessary.

The predetermined display regions 20A and 20B of the combiners 50A and 50B each are provided with first to seventh display regions (not shown) corresponding to the first to seventh display regions 20a to 20g that are content display regions in the first embodiment. Further, the predetermined display regions 20A and 20B of the combiners 50A and 50B each may be provided with an eighth display region (not shown) corresponding to the eighth display region 20h that is a content display region in the second embodiment. Still further, light control mirrors are provided in the fourth, fifth, sixth, and seventh display regions in the display regions 20A and 20B so as to control a light-transmitting state and a non-light-transmitting state of these regions, so that the HUD controllers 102 of the HUD apparatuses 100A and 100B perform substantially the same HUD display processing as that of the HUD controller 102 of the HUD apparatus 100 according to the above-described first embodiment on the fourth, fifth, sixth, and seventh display regions in the display regions 20A and 20B. Further, light control mirrors may be provided in the fourth, fifth, sixth, seventh, and eighth display regions in the display regions 20A and 20B so as to control a light-transmitting state and a non-light-transmitting state of these regions, so that the HUD controllers 102 of the HUD apparatuses 100A and 100B may perform substantially the same HUD display processing as that of the HUD controller 1102 of the HUD apparatus 1100 according to the above-described second embodiment on the fourth, fifth, sixth, seventh, and eighth display regions in the display regions 20A and 20B.

In the HUD apparatuses 100A and 100B according to the third and the fourth embodiments, for example, in a state where ignition switches of the vehicles 1A and 1B are not turned on, the combiners 50A and 50B block the opening 1c of the dashboard 1b and a HUD apparatus housing portion of the ceiling portion of the driver seat, as represented by virtual lines in Figs. 21A and 21B. Then, in conjunction with the ignition switches being turned on, the combiners 50A and 50B are automatically tilted to predetermined positions across the eye range ER of the driver and can operate as the HUD apparatuses 100A and 100B. In conjunction with the ignition switches being turned off, the combiners 50A and 50B are automatically tilted and returned to original positions.

Alternatively, when driving modes of the vehicles 1A and 1B are the automatic driving modes of levels 1 to 5 (other than the manual driving mode), the combiners 50A and 50B are automatically tilted to predetermined positions across the eye range ER of the driver. When the driving modes of the vehicles 1A and 1B are the manual driving modes or the ignition switches are turned off, the combiners 50A and 50B are automatically tilted and returned to original positions. In the manual driving mode, visibility in front of the vehicle is better when the combiners 50A and 50B do not exist on a line of sight of the driver. Therefore, it is desirable that the combiners 50A and 50B are erected in front of the driver only in a case of the automatic driving mode.

### (Fifth Embodiment)

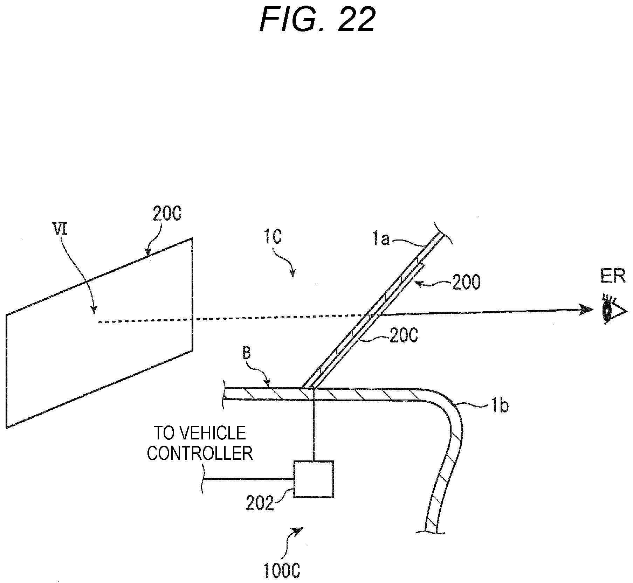

Fig. 22 is a view illustrating the configuration of a HUD apparatus 100C according to a fifth embodiment of the present invention and is a view corresponding to Fig. 2 illustrating the configuration of the HUD apparatus 100 according to the first embodiment.

The HUD apparatus 100C according to the fifth embodiment is configured with a resin-made transparent organic light-emitting diode (OLED) 200 provided so as to adhere to an inner side of the windshield 1a, and a HUD controller 202 that causes predetermined contents to be displayed on the transparent OLED 200. Further, the HUD apparatus 100C may include a speaker (not shown) that generates a predetermined sound as necessary.

The transparent OLED 200 is provided with a display region 20C. The predetermined contents are displayed in the display region 20C via the HUD controller 202. The display region 20C is provided with first to seventh display regions (not shown) corresponding to the first to seventh display regions 20a to 20g provided in the display region 20 of the HUD apparatus 100 of the first embodiment. Further, the display region 20C may be provided with an eighth display region (not shown) corresponding to the eighth display region 20h provided in the display region 20 of the HUD apparatus 1100 of the second embodiment.

Since the transparent OLED 200 is transparent, the transparent OLED 200 can perform a display such that the predetermined contents are superimposed on scenery seen through the transparent OLED 200. Further, the transparent OLED 200 reduces transparency in a predetermined region of the display region 20C (regions corresponding to the fourth, fifth, sixth, seventh display regions 20d, 20e, 20f, 20g of the first embodiment and a region corresponding to the eighth display region 20h of the second embodiment), so that the desired contents can be displayed only on a vehicle interior side.

This application is based on Japanese Patent Application 2017-253770 filed on December 28, 2017, and Japanese Patent Application 2017-253479 filed on December 28, 2017, and the contents of which are incorporated herein by reference.

## Claims

1. A head-up display apparatus that is mounted on a vehicle having a plurality of driving modes with different degrees of automation and that is configured to display a predetermined content in a predetermined display region provided in front of a driver seat,
wherein the head-up display apparatus is configured to display different contents depending on the plurality of driving modes.

2. The head-up display apparatus according to claim 1,
wherein the head-up display apparatus is configured to change at least one of a size of a display region and a display position of one of the contents depending on change in the driving mode of the vehicle.

3. The head-up display apparatus according to claim 1 or 2,
wherein the plurality of driving modes include an automatic driving mode and a manual driving mode, and
wherein the head-up display apparatus is configured to set a display region of a content corresponding to the automatic driving mode to be wider than a display region of a content corresponding to the manual driving mode.

4. The head-up display apparatus according to any one of claims 1 to 3,
wherein at least a part of a display region of one of the contents is configured to be switchable between a light-transmitting state and a non-light-transmitting state, and
wherein the head-up display apparatus is configured to change a size of a region of the non-light-transmitting state depending on the driving modes.

5. A head-up display apparatus that is mounted on a vehicle having a plurality of driving modes with different degrees of automation and that is configured to display a predetermined content in a predetermined display region provided in front of a driver seat,
wherein when the driving mode of the vehicle is changed, the head-up display apparatus is configured to display a content indicative of a notice of the change in the driving mode.

6. The head-up display apparatus according to claim 5,
wherein the vehicle is configured to have a first driving mode (equal to or higher than a level 4) that does not require a driving operation by a driver and a second driving mode (equal to or lower than a level 3) that requires a driving operation by the driver, and
wherein when the driving mode of the vehicle is changed from the first driving mode to the second driving mode, the head-up display apparatus is configured to display a content indicative of a notice of the change in the driving mode.

7. The head-up display apparatus according to claim 5 or 6,
wherein when displaying the content indicative of the notice of the change in the driving mode, the head-up display apparatus is configured to display a content indicative of a time (time limit) before the change in the driving mode is completed.

8. The head-up display apparatus according to any one of claims 5 to 7,
wherein the change in the driving mode is automatically determined based on information detected by a sensor and the like mounted on the vehicle, and
wherein the head-up display apparatus is configured to display a content indicative of a reason for the change in the driving mode.

9. The head-up display apparatus according to any one of claims 5 to 8,
wherein when displaying the content indicative of the notice of the change in the driving mode, the head-up display apparatus is configured to generate a predetermined sound indicating the notice of the change in the driving mode.
